# EUROPEAN PATENT SPECIFICATION

(11) **EP 4 375 825 B1**
(45) Date of publication and mention of the grant of the patent: **13.08.2025**
(21) Application number: 23809077.3
(22) Date of filing: 10.10.2023
(51) Int. Cl.: G06F 3/06, G06F 12/02, G06F 9/50

(54) **ELECTRONIC DEVICE AND METHOD FOR MANAGING MEMORY OF ELECTRONIC DEVICE**
ELEKTRONISCHE VORRICHTUNG UND VERFAHREN ZUR VERWALTUNG DES SPEICHERS EINER ELEKTRONISCHEN VORRICHTUNG
DISPOSITIF ÉLECTRONIQUE ET PROCÉDÉ DE GESTION DE MÉMOIRE DE DISPOSITIF ÉLECTRONIQUE

(30) Priority: 12.10.2022 KR 20220130266; 11.11.2022 KR 20220150838
(43) Date of publication of application: 29.05.2024
(73) Proprietor: Samsung Electronics Co., Ltd., Suwon-si, Gyeonggi-do 16677 (KR)
(72) Inventor: KWON, Jiman, Suwon-si, Gyeonggi-do 16677 (KR); PARK, Jaehyeon, Suwon-si, Gyeonggi-do 16677 (KR); BACK, Geonhee, Suwon-si, Gyeonggi-do 16677 (KR); LEE, Dongwook, Suwon-si, Gyeonggi-do 16677 (KR); CHO, Daehyun, Suwon-si, Gyeonggi-do 16677 (KR)
(74) Representative: Nederlandsch Octrooibureau
(86) International application number: PCT/KR2023/015503
(87) International publication number: WO 2024/080693

(56) References cited:
- JP-A- 2020 155 182
- KR-A- 20140 021 151
- KR-A- 20200 100 958
- KR-A- 20220 033 912
- KR-B1- 101 591 601
- US-A1- 2016 098 229
- US-A1- 2022 113 887

## Description

### [Technical Field]

The disclosure relates to an electronic device, for example, to a method for managing available capacity of a memory in the electronic device.

### [Background Art]

A portable electronic device (hereinafter referred to as an electronic device), such as a smartphone, may provide a user experience by using various applications. As functions provided by electronic devices increase, data processing speed is required to be improved. Accordingly, performance of hardware, such as a processor and memory, is also required to be improved. As a result, the capacity of memory (e.g., random access memory (RAM)) is also increasing. However, an operation of properly managing the capacity of memory needs to be provided to execute many applications at the same time.

Due to the limited capacity of memory, electronic devices may perform various memory reclaim operations and process kill operations to monitor the state of the memory and maintain system performance at an acceptable level. Patent document US 2022/0113887 A1, published on 14 April 2022, discloses methods, systems, and devices for performing data migration operations using a memory system. The memory system may include a data migration component, such as a driver, for facilitating the transfer of data between a first memory device that may implement a first memory technology and a second memory device that may implement a second memory technology.

### [Disclosure of Invention]

### [Technical Problem]

A memory reclaim operation performed by an electronic device consumes processor resources, and thus may affect other concurrent operations of a processor. For example, when an application is initially executed, a memory reclaim operation by the electronic device may also occur during an application execution sequence for the application. In this case, the application execution sequence may be delayed if the processor resources are consumed by the memory reclaim operation, which may cause the initial (entry) process of the application to be slower.

### [Solution to Problem]

The invention is set out in the appended independent claims.

Advantageous embodiments are defined by the appended dependent claims.

An electronic device according to the disclosure (specification or invention) may include a first memory, a second memory having characteristics different from characteristics of the first memory, and a processor operatively connected to the first memory and the second memory.

According to various embodiments, the processor may perform, based on an amount of available space in the first memory, a memory reclaim operation to make more space available in the first memory.

According to various embodiments, the processor may perform, in response to a first execution event of an application stored in the second memory, a sequence of instructions to launch the application and change at least one memory management setting configured for the memory reclaim operation to delay or stop the memory reclaim operation, and based on completing performing the sequence of instructions to launch the application, restore the at least one memory management setting to a state prior to performing the sequence of instructions to launch the application.

A method for managing a memory of an electronic device according to various embodiments of the disclosure may include performing, based on an amount of available space in a first memory, a memory reclaim operation to make more space available in the first memory, in response to a first execution event of an application stored in the second memory, performing a sequence of instructions to launch the application, changing at least one memory management setting configured for the memory reclaim operation to delay or stop the memory reclaim operation, and based on completing performing the sequence of instructions to launch the application, restoring the at least one memory management setting to a state prior to performing the sequence of instructions to launch the application.

### [Advantageous Effects of Invention]

Various embodiments of the disclosure may provide an electronic device and a method for managing a memory of the electronic device, wherein execution of a memory reclaim operation in the entry section of an application is delayed to improve the entry speed of the application.

### [Brief Description of Drawings]

FIG. 1 is a block diagram of an electronic device in a network environment, according to various embodiments.
FIG. 2 is a block diagram of a program according to various embodiments.
FIG. 3 is a block diagram of an electronic device according to various embodiments.
FIGS. 4A and 4B are flowcharts of a method for managing a memory of an electronic device according to various embodiments.
FIGS. 5A, 5B, and 5C are diagrams illustrating a usage status of a processor of an electronic device according to various embodiments.
FIG. 6 is a flowchart of a method for managing a memory of an electronic device according to various embodiments.
FIG. 7 is a diagram illustrating operations of a kernel and each thread when an application is executed according to various embodiments.
FIG. 8a is a flowchart of a method for managing a memory of an electronic device according to various embodiments.
FIG. 8b is a flowchart of a method for managing a memory of an electronic device according to various embodiments.
FIG. 9 is a flowchart of a method for recording an execution time of an application by an electronic device according to various embodiments.
FIG. 10 is a flowchart of a method of adjusting a threshold value when an electronic device is booted, according to various embodiments.
FIGS. 11A and 11B are diagrams illustrating available capacity of a memory when managing a memory according to a comparative example.
FIGS. 12A and 12B are diagrams illustrating available capacity of a memory when memory is managed according to various embodiments.

### [Mode for the Invention]

Hereinafter, with reference to the drawings, embodiments of the disclosure will be described in detail so that those skilled in the art are able to carry out the disclosure. However, the disclosure may be embodied in many different forms and is not limited to the embodiments described herein. In connection with the description of the drawings, the same or similar reference numerals may be used for the same or similar elements. In addition, in the drawings and related descriptions, descriptions of well-known functions and constructions may be omitted for clarity and conciseness.

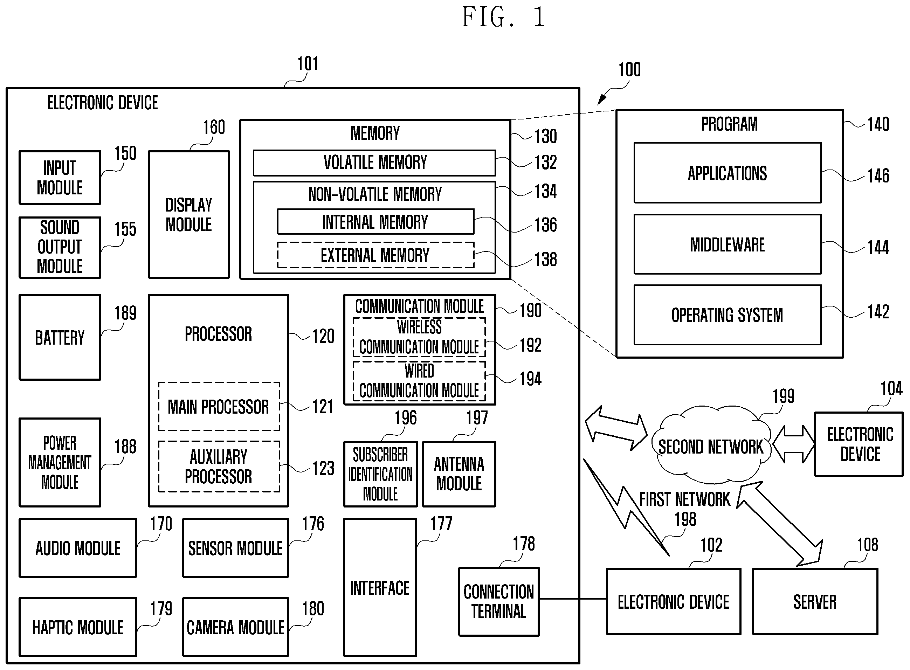

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

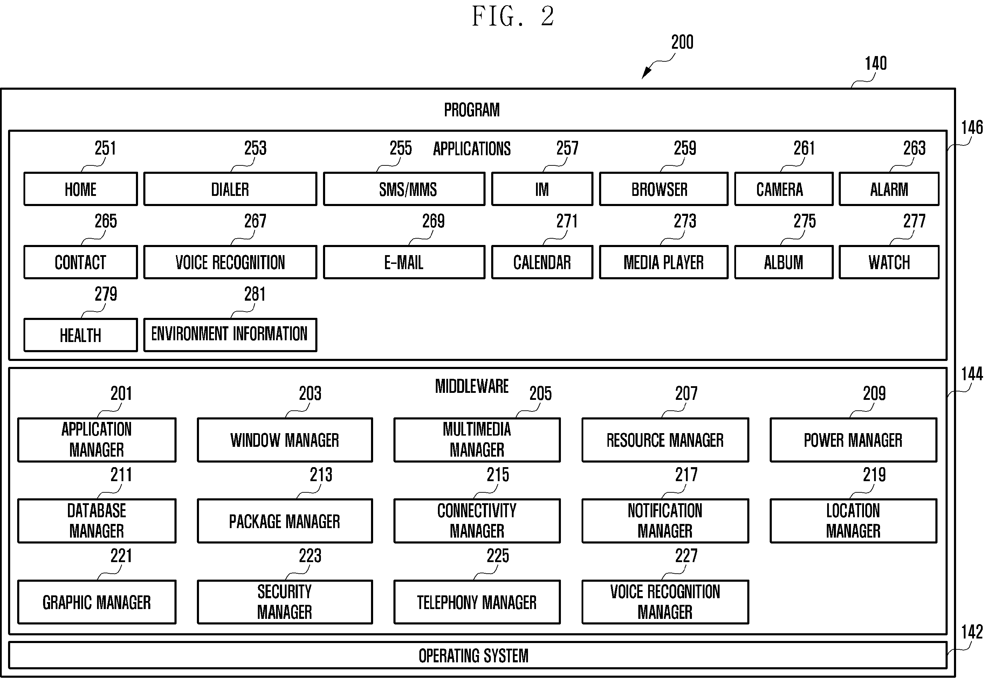

FIG. 2 is a block diagram of a program according to various embodiments.

According to an embodiment, the program 140 may include an operating system 142 for controlling one or more resources of the electronic device 101, middleware 144, or an application 146 executable on the operating system 142. The operating system 142 may include, for example, Android^{™}, iOS^{™}, Windows^{™}, Symbian^{™}, Tizen^{™}, or Bada^{™}. At least some of the programs 140 may be, for example, preloaded in the electronic device 101 during manufacturing, or be downloaded or updated from an external electronic device (e.g., the electronic device 102 or 104 or the server 108) in the user's use environment.

The operating system 142 may control (e.g., allocate or reclaim) system resources (e.g., process, memory, or power) of the electronic device 101. The operating system 142 may include one or more driver programs for additionally or alternatively driving other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 to enable the application 146 to use functions or information provided by one or more resources of the electronic device 101. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphics manager 221, a security manager 223, a telephony manager 225, or a voice recognition manager 227. The application manager 201 may manage, for example, the life cycle of the application 146. The window manager 203 may manage, for example, GUI resources used in a screen. The multimedia manager 205 may, for example, identify a format necessary for reproducing media files, and encode or decode the media file by using a codec suitable for the format. The resource manager 207 may manage, for example, a source code of the application 146 or a memory space. The power manager 209 may manage, for example, battery capacity, temperature, or power, and determine or provide power information necessary for the operation of the electronic device 101 by using corresponding information among them. According to an embodiment, the power manager 209 may interwork with a basic input/output system (BIOS).

The database manager 211 may, for example, generate, search, or change a database to be used in the application 146. The package manager 213 may manage, for example, installation or update of applications distributed in the form of package files. The connectivity manager 215 may manage, for example, a wireless or wired connection between the electronic device 101 and an external electronic device. The notification manager 217 may, for example, provide a function of notifying a user of an event (e.g., a call, message, or alarm) that has occurred. The location manager 219 may manage, for example, location information of the electronic device 101. The graphic manager 221 may manage, for example, a graphic effect to be provided to a user or a user interface related thereto. The security manager 223 may provide, for example, system security or user authentication. The telephony manager 225 may manage, for example, a voice call or video call function of the electronic device 101. The voice recognition manager 227 may, for example, transmit user's voice data to the server 108 and receive a command corresponding to a function to be performed based on the voice data by the electronic device 101 or text data converted based on the corresponding voice data. According to an embodiment, the middleware 144 may dynamically delete some existing components or add new components. According to an embodiment, at least part of the middleware 144 may be included as part of the operating system 142 or may be implemented as software separate from the operating system 142.

The applications 146 may include applications, for example, home 251, dialer 253, SMS/MMS 255, instant message (IM) 257, browser 259, camera 261, alarm 263, contact 265, voice recognition 267, email 269, calendar 271, media player 273, album 275, watch 277, health 279 (e.g., measure exercise or blood sugar), or environmental information 281 (e.g., barometric pressure, humidity, or temperature information). According to an embodiment, the application 146 may further include an information exchange application (not shown) capable of supporting information exchange between the electronic device 101 and an external electronic device. The information exchange applications may include, for example, a notification relay application for forwarding designated information (e.g., a call, message, or alarm) to an external electronic device, or device management application for managing the external electronic device. The notification relay application may, for example, transmit notification information corresponding to an event (e.g., mail reception) generated in another application (e.g., email application 269) of the electronic device 101 to an external electronic device, or receive notification information from the external electronic device to provide the notification information to the user of the electronic device 101. The device management application may control power (e.g., turn-on or turn-off) or functions (e.g., brightness, resolution, or focus of the display module 160 or camera module 180) of an external electronic device communicating with the electronic device 101 or some components (e.g., the display module 160 or the camera module 180) thereof. The device management application may additionally or alternatively support installation, deletion, or update of an application operating in an external electronic device.

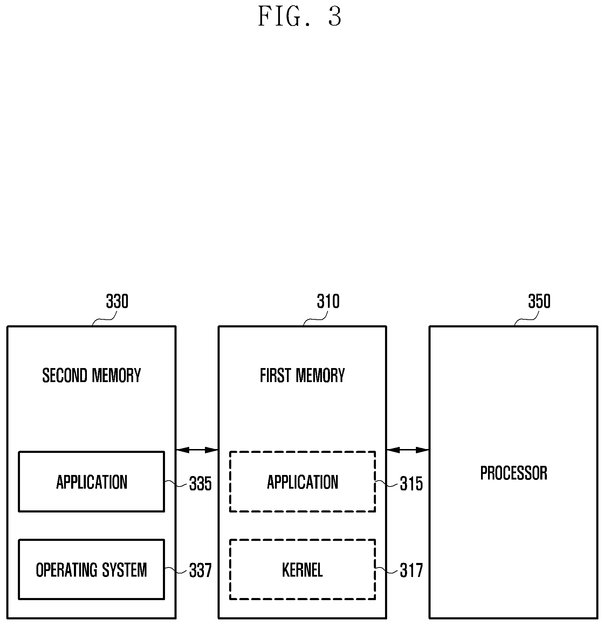

FIG. 3 is a block diagram of an electronic device according to various embodiments.

Referring to FIG. 3, the electronic device 300 may include a first memory 310, a second memory 330 and a processor 350, and may implement various embodiments of the disclosure even though some of the illustrated components are omitted or replaced at least one component not illustrated is added. In addition to the illustrated components, the electronic device 300 may further include at least some of the components and/or functions of the electronic device 101 of FIG. 1.

According to various embodiments, the electronic device 300 may be implemented as an electronic device 300 such as a smart phone, tablet PC, desktop PC, laptop PC, PDA, PMP, or wearable device. The electronic device 300 may be further implemented as an embedded system included in devices such as televisions, set-top boxes, DVD players, audio devices, refrigerators, air conditioners, and washing machines.

According to various embodiments, the second memory 330 may be a large-capacity storage device as a non-volatile memory. Data recorded in the second memory 330 may not be deleted even when power is cut off. The second memory 330 may include at least one of one time programmable ROM (OTPROM), PROM, EPROM, EEPROM, mask ROM, flash ROM, flash memory, a hard drive, or a solid state drive (SSD), but is not limited thereto. The second memory 330 may store various data, and the stored data may be updated according to the operation of the processor 350. The second memory may store various applications 335 and an operating system 337. The second memory 330 may store various instructions executable by the processor 350. The instructions may include control commands, such as arithmetic and logic operations, data movement, and input/output, recognizable by the processor 350. The second memory 330 may include at least a part of the configuration and/or functions of the non-volatile memory 134 of FIG. 1, and the second memory 330 may include at least a part of the programs 140 of FIGS. 1 and 2.

According to various embodiments, the first memory 310 may be a volatile memory having properties different from those of the second memory 330. Data recorded in the first memory 310 may be deleted when power supplied thereto is cut off. At least a partial region of the first memory 310 may be allocated as a main memory, and the processor 350 may load or store data of the second memory 330 into the first memory 310 to perform calculation on the data. For example, the first memory 310 may include at least one of dynamic random access memory (DRAM), static RAM (SRAM), or synchronous dynamic RAM (SDRAM), but is not limited thereto. When the application 335 stored in the second memory 330 is executed, the application 315 may be loaded onto the first memory 310. In addition, the kernel 317 of the operating system 337 may be loaded on the first memory 310 at any time during the operation of the electronic device 300. The first memory 310 may include at least a part of the configuration and/or functions of the volatile memory 132 of FIG. 1.

According to various embodiments, the processor 350 may execute software (e.g., the program 140 of FIGS. 1 and 2) to control at least one different component (e.g., hardware or software components) of the electronic device 300 connected to the processor 350 and perform various data processing or calculations. The processor 350 may include at least one central processing unit (CPU) that processes data or performs calculations. The processor 350 may be operatively, electrically, and/or functionally connected to components of the electronic device 300 including the first memory 310 and the second memory 330. The processor 350 may further include at least a part of the configuration and/or functions of the processor 120 of FIG. 1. According to an embodiment, the electronic device 300 may include two or more processors, and operations of the processor 350 described later may also be performed one by one by each processor.

According to various embodiments, calculating and data processing functions that the processor 350 may implement within the electronic device 300 will not be limited, but various embodiments for improving the entry speed of an application by avoiding or reducing a memory reclaim operation during application execution while performing the memory reclaim operation according to the amount of available space (or available capacity) of the first memory 310 will be described in this disclosure. Operations of the processor 350 to be described later may be performed by executing instructions stored in the second memory 330. The memory reclaim operation may be also referred to a memory securing operation.

According to various embodiments, an operating system 337 and various applications 335 may be installed in the second memory 330. For example, the operating system 335 may be an Android^{™} operating system, but is not limited thereto. The processor 350 may drive the operating system 335 after booting, and the kernel 317 may be loaded on the first memory 310 during the operation of the electronic device and perform various operations. For example, the kernel may provide an interface between hardware and application, and may perform various control operations including controlling, allocating, and reclaiming system resources.

According to various embodiments, the electronic device 300 may execute various applications 315. When an application execution event (e.g., user selection of an application icon) occurs, the processor 350 may perform a sequence of instructions to launch the application including series of tasks to enable the application being executed in user space. Hereinafter, the sequence of instructions to launch the application 315 may be referred to an execution sequence of the application 315. According to an embodiment, the execution sequence of the application 315 may include at least one of loading files of the application 315 stored in the second memory 330 to the first memory 310, generating at least one of an activity, a process, or a thread for executing the application 315, and generating an image data of the application 315. More specifically, when an execution event of the application 315 occurs, the event information is provided to a specific thread through a callback function, and when the execution event of the application 315 is detected in the specific thread, the processor 350 may load the files of the application 315 stored in the second memory 330 into the first memory 310. Additionally, the processor 360 may create an empty activity for use in the execution sequence of the application 315, generate a process of the application 315, generate an object including thread information and internal data structure of the application 315, initiate main thread of the application 315, generate main activity of the application 315, inflate a view to be placed within the main activity after creating screen components (or UI), and draw a first screen of the application. The processor 350 may recognize that a time point when the first screen of the application 350 is drawn as a time point when an execution sequence of the application is completed, and send the completion event of the execution sequence, through a callback function or message transmission, to a predetermined thread (e.g., a memory reclaim operation management thread).

Applications executable in the electronic device 300 may include the application 148 of FIG. 2 and various applications installed after being downloaded from a 3rd party. When an execution event of a specific application occurs, the processor 350 may identify an application to be executed through a callback function and perform various operations for executing the application.

According to various embodiments, when an application is executed, a process of the corresponding application may be allocated on the first memory 310. Accordingly, the process may occupy part of the capacity of the first memory 310, and an amount of available space (or an available capacity) of the first memory 310 may be reduced in a situation in which a plurality of applications are simultaneously executed. Here, the available capacity (or memfree) of the first memory 310 may refer to capacity of a storage region in which data is not loaded or allocation to a currently running process is not achieved, within the entire storage region of the first memory 310.

According to various embodiments, the processor 350 may perform various memory reclaim operations to maintain an amount of available space of the memory. For example, processor 350 may perform, as a memory reclaim operation, at least one of low memory killer daemon (LMKD), low memory killer (LMK), kernel swap daemon (Kswapd), direct reclaim, per-process reclaim (PPR).

According to various embodiments, the kernel swap daemon (Kswapd) may be an Android kernel module configured to operate for securing memory in available state of the first memory 310. The kernel swap daemon may be woken up and start a swap operation when the available capacity of the first memory 310 is less than or equal to a first threshold value (e.g., watermark_low). The swap operation of the kernel swap daemon may include an operation of compressing process data in the first memory 310 according to a compression algorithm configured in the system and storing the data on a partition (e.g., zRAM) or a designated region of the first memory 310. In addition, the swap operation of the kernel swap daemon may include an operation of reclaiming memory by deleting a part (e.g., a clean page) of process data in the first memory 310.

According to various embodiments, the kernel swap daemon may stop the swap operation when the available capacity of the first memory 310 exceeds a second threshold value (e.g., watermark_high) by the swap operation. According to an embodiment, the first threshold value and the second threshold value may be managed in kernel parameters (e.g., vm.min_free_kbytes and/or vm.extra_free_kbytes), and may be adjusted during kernel swap daemon operation according to a system operation code.

According to various embodiments, direct reclaim, which is a part of codes included in the kernel swap daemon, may be an operation of directly reclaiming unused parts of the processes in the first memory 310. The direct reclaim may be initiated when the available capacity of the first memory 310 is less than or equal to the third threshold value (or watermark_min), and may be stopped when the available capacity again exceeds the third threshold value. Here, the third threshold value may be a value lower than the first threshold value and the second threshold value. According to an embodiment, when the available capacity of the first memory 310 is equal to or less than the third threshold value, the processor 350 may perform the direct reclaim, and may not perform the swap operation of the kernel swap daemon.

According to an embodiment, the swap operation and direct reclaim of the kernel swap daemon have a high priority during scheduling of the processor 350, and relatively slow memory securing speed.

According to various embodiments, the low memory killer daemon (LMKD) may terminate (or kill) at least one of the running processes when the available capacity of the memory is equal to or less than a fourth threshold value. Here, the fourth threshold value is a value higher than the first threshold value and the second threshold value, and may be, for example, configured to be 1.1 times the first threshold value, but is not limited thereto. The low memory killer daemon may identify the status (e.g., available capacity, swap usage, etc.) of the first memory 310 and the priority of running processes and may sequentially terminate processes in order of the lowest priority. Here, the priority of the processes may be determined by the score (e.g., OOM_SCORE_ADJ) of each process, and the score of each process may be determined according to the degree to which each process is exposed to a user. A background process may have a high score (or low priority) and a system process may have a low score (or high priority), so that processes may be sequentially terminated in order of the high score. Low memory killer daemon may be a process running in a user space.

According to various embodiments, the low memory killer (LMK) is an internal code of the kernel swap daemon (Kswapd) and may be triggered by the kernel. The operation of the low memory killer may be substantially the same as that of the low memory killer daemon, and the electronic device 300 may operate at least one of the low memory killer daemon and the low memory killer. Since the low memory killer daemon or low memory killer terminates a process, the speed and operation of securing the available capacity of the first memory 310 may be fast. However, since the data structure processing of the process to be terminated, the memory cleaning-up operation, and/or the ongoing task of the process to be terminated need to be completed, resource consumption of the processor 350 may be high.

According to various embodiments, the kernel swap daemon may generate a memory pressure event (e.g., Vmpressure or pressure stall information (PSI)) according to the efficiency of securing available capacity of the memory while performing the swap operation and the direct reclaim operation. When a memory pressure event is generated by the kernel swap daemon, the low memory killer daemon (LMKD) and/or the low memory killer (LMK) may be activated, and at least one process may be terminated (or killed) after a designated delay time elapses from the operation of the kernel swap daemon.

According to various embodiments, the per-process reclaim (PPR) may be an operation of reclaiming according to an operating state for each process. The per-process reclaim may be associated with the operation of the framework of the operating system, and when a process satisfies a predetermined condition, the corresponding process may be reclaimed. For example, a specific process may enter the background or a process in which a PPR-available node is generated by a developer may be subject to be reclaimed. The per-process reclaim may not have a separate threshold value, and may be operated at a time when the corresponding process is required to be reclaimed. In addition, an available memory may be secured faster than the kernel swap daemon by designating a desired page reclaim mode. Since per-process reclaim does not kill the process, the activity and context of the target process may be maintained even after memory is reclaimed.

The above-described low memory killer daemon (LMKD), low memory killer(LMK), kernel swap daemon (Kswapd), direct reclaim, per process reclaim (PPR) are examples of memory reclaim operation corresponds to an embodiment, and other various operations for increasing the available capacity of the memory may be included. For example, various embodiments of present disclosure may be applied to operations of various processes (or thread, algorithm, code) that increase available memory capacity, such as killing at least one of executed processes, swapping a page, or discarding page, if a predetermined condition is satisfied such as the available memory capacity decreases under a threshold.

According to various embodiments, memory reclaim operations, such as kernel swap daemon (Kswapd), direct reclaim, low memory killer daemon (LMKD), and low memory killer (LMK), may be performed at any time when available capacity of the memory reaches a specified threshold value. Accordingly, the memory reclaim operation may be performed even when a new application is executed and operated, and thus the memory reclaim operation may affect the entry speed of the application. For example, according to the level of available capacity of the first memory 310, the memory reclaim operation may be performed at least one of the low memory killer daemon (LMKD) or the low memory killer (LMK) - swap operation of the kernel swap daemon - direct reclaim. When securing the available capacity of the first memory 310 is delayed, a swap operation of the kernel swap daemon and direct reclaim may occur. In this case, the two operations may consume a lot of system resources and directly affect the performance of the electronic device 300. When an application execution event occurs, a part of the first memory 310 may be occupied by the process generating and activity generating operations for executing the application. As a result, the available capacity of the first memory 310 may be reduced, and thus the memory reclaim operation may occur. In this case, since the application is in the initial stage of execution, the amount of memory required by the application is not very large. However, once the operation of the low memory killer daemon (or low memory killer) or kernel swap daemon is performed, system resource cost may be high.

Accordingly, in various embodiments of the disclosure, at the time of executing a new application, a memory reclaim operation management thread may be executed to minimize the delay or occurrence frequency of the memory reclaim operation, thereby improving the entry speed of the application when the application is initially executed.

According to various embodiments, the processor 350 may detect an execution event (or command) for an application stored in the second memory 330. For example, when an execution event of the application occurs by a user selecting an application icon, the processor 350 may identify the execution event of the corresponding application through a callback function. When an execution event of an application is detected, the processor 350 may execute a memory reclaim operation management thread. When the application is executed, the memory reclaim operation management thread may detect whether the application is executed through the callback function, and may perform a function of changing at least one memory management setting related to the memory reclaim operation during the execution sequence of the application.

According to various embodiments, the processor 350 may change at least one memory management setting configured for execution of a memory reclaim operation to delay, stop, and/or reduce the memory reclaim operation in response to an execution event of an application. Here, the at least one memory management setting may include a threshold value (or parameter) that is a criterion for triggering a memory reclaim operation, and/or information on whether a specific memory reclaim operation is activated (or whether a thread is started/stopped). According to an embodiment, the memory management setting may be referred as a system configuration value. According to an embodiment, the processor 350 may change parameter relating to a memory reclaim operation, reduce frequency of occurrence of a memory reclaim operation, and/or delay a memory reclaim operation,

According to an embodiment, the processor 350 may change at least one memory management setting in response to an initiation of a sequence of instructions to launch an application (or an execution sequence of an application) according to an execution event of the application, and restore the memory management setting to a previously configured value when it is determined that the sequence is completed. For example, the processor 350 may restore the memory management setting to a state prior to performing the sequence of instructions to launch the application, based on the completion of the sequence of instructions to launch the application.

According to an embodiment, the processor 350 may determine that an execution sequence of an application is completed, when a previously recorded estimated duration of the execution sequence of the application is elapsed. According to an another embodiment, the processor 350 may determine that an execution sequence of an application is completed, when identifying a completion event of a execution sequence of the application.

According to an embodiment, the processor 350 may determine a duration of an execution sequence of an application based on data (e.g., estimated duration) previously stored in the first memory 310 or the second memory 330, and determine a time point that the determined estimated duration is elapsed from a time point of detecting the execution event of the application or initiating of the execution event to a time point of elapsed as a completion time point of the execution sequence of the application. Here, the estimated duration of the execution sequence of the application may include a time length from a time point of the execution event of the application to a completion event of the execution sequence. According to an embodiment, the estimated duration of the execution sequence of the application may be recorded in execution log of the application, and/or designated data (or database) stored in the second memory 330 for use in operation of the memory reclaim operation management thread. According to an embodiment, the processor 350 may identify the estimated duration of the application from a database in the second memory 330 and/or a data structure (or a variable) temporarily stored in the first memory 310.

According to an embodiment, when a specified task (e.g., drawing of a first screen of an application) is completed during execution sequence of the application, a completion event of the execution sequence is generated through a callback function or message transmission, the processor 350 may determine that the execution sequence of the application is completed when the completion event is detected. In this embodiment, the processor 350 may use the completion event directly, rather than using the estimated duration of the execution sequence of the application. In this embodiment, operation of recording the estimated duration upon completion of the execution sequence of the application, which will be described later, can be skipped.

According to an embodiment, the processor 350 may perform an operation of changing the at least one memory management setting in consideration of the task delay level and/or the margin level of memory resources in the processor 350 currently in use.

According to an embodiment, when an execution event (or command) of an application is detected, the processor 350 may identify a task execution delay time (e.g., PSI memory some Avg 10) due to the memory reclaim operation, and when the delay time is equal to or less than a first reference time, and/or when the available capacity of the first memory 310 is equal to or greater than the reference capacity, the processor 350 may change the at least one memory management setting. Here, the task execution delay time (e.g., pressure stall information (PSI) memory some Avg 10) due to the memory reclaim operation may refer to a ratio of delay time to a designated time (e.g., 10 seconds) due to the memory reclaim operation (e.g., kernel swap daemon, etc.), even for any one among the entire tasks working in the processor 350. That is, the processor 350 may change the at least one memory management setting in a state where the available capacity of the memory is not significantly insufficient.

According to an embodiment, in case that the currently available capacity of the first memory 310 is greater than or equal to a reference capacity (e.g., 200 MB) when an execution event (or command) of an application is detected and, the processor 350 may change the at least one memory management setting. That is, the processor 350 may change the at least one memory management setting in a state where the currently available capacity of the first memory 310 is sufficient.

According to an embodiment, when an execution event of an application is detected, the processor 350 may lower the first threshold value (e.g., watermark_low), which is the criterion for triggering the swap operation of the kernel swap daemon, and the second threshold value (e.g., watermark _high) which is the criterion for terminating the swap operation, by values designated during the execution time of the application. Here, the designated value may be 1/3 of the first threshold value and the second threshold value, respectively, which are configured before the execution event of the application is identified, but is not limited thereto. The processor 350 may change the first threshold value and the second threshold value to lower values by using a designated file node (e.g., Extra_Free_kbytes) of the kernel. Here, the designated file node may store various kernel parameters used for the system to control the memory managing operations. As described above, when the first threshold value and the second threshold value are lowered, the timing at which the swap operation of the kernel swap daemon is initiated may be delayed according to the lowering of the first threshold value, and the swap operation may be terminated more quickly according to the lowering of the second threshold value, even after the available capacity of the first memory 310 is lowered. Accordingly, the operation frequency and/or time of the kernel swap daemon, which has a high priority during scheduling, may be reduced, so that a series of operations (e.g., process generation, activity generation, etc.) for application execution may be performed quickly. According to another embodiment, when an execution event of an application is detected, the processor 350 may deactivate the kernel swap daemon for at least a portion of the duration of the execution sequence of the application. For example, the processor 350 may disable by force the kernel swap daemon during the duration of the execution sequence of the application. Alternatively, the processor 350 may disable by force the kernel swap daemon for a predetermined time (e.g., 2 sec) of the execution time (e.g., 3 sec) from detecting of the execution event, and reactive the kernel swap daemon after the predetermined time is passed.

According to an embodiment, the processor 350 may stop a per-process reclaim operation during a duration of the execution sequence of the application when an execution event of an application is detected. For example, since the per-process reclaim operation causes the swap operation of the kernel swap daemon, in order to stop the same, the reclaim operation for the corresponding process may be stopped in code through file write to the kernel node enabling the entry of the application to be recognized. According to an embodiment, when there is no kernel node enabling the entry of the application to be recognized, a thread performing per-process reclaim may be controlled to be stopped for a designated time (e.g., application execution time). The per-process reclaim operation may be performed without a threshold condition for the available capacity of the first memory 310 and be temporarily stopped to reduce resources generated by monitoring and reclaiming each process. According to an embodiment, when an execution event of an application is detected, the processor 350 may stop (or suspend) per process reclaim operation for a portion of the duration of the execution sequence of the application based on available capacity of the first memory 310. For example, when the available capacity of the first memory is sufficient at the time of application execution, the processor may stop per process reclaim for a part time (e.g., 2 sec) of the duration of the execution sequence (e.g., 3 sec) from the execution event, and reactivate the per process reclaim after the part time.

According to various embodiments, when the execution sequence of an application is completed, the processor 350 may restore at least one memory management setting that has been changed, to the previously configured value (or a state prior to performing the execution sequence. For example, the processor 350 may change the first threshold value and the second threshold value related to the swap operation of the kernel swap daemon back to values configured before detecting the execution event of the application, and resume a per-process reclaim operation. For example, the processor 350 may restore the at least one memory management setting that has been changed to a memory management setting previously configured before detecting of execution event of the application, when an execution completion event of the application is detected, or a estimated duration recorded for the application is elapsed.

According to various embodiments, the processor 350 may record a estimated duration of an execution sequence of the application when the execution sequence of the application (or sequence of instructions to launch the application) is completed. For example, an execution record of an application may be recorded in log time, and the processor 350 may store the value in a database or a data structure. According to an embodiment, the processor 350 may record the execution time in a database or a data structure by matching a key as the name of the process and a value that matches the key as the estimated duration of the execution sequence of the application. According to an embodiment, the processor 350 may configure the estimated duration of the execution sequence of the application to be between a minimum of 1 second and a maximum of 3 seconds, and record the estimated duration measured in 1 second or less as 1 second.

According to an embodiment, at the time of executing a specific application, the processor 350 may record a estimated duration of execution sequence of the corresponding application only when the task execution delay time (e.g., PSI CPU some AVG 10) due to the execution of another task is less than a specified value (e.g., 30). Here, the task execution delay time (e.g., PSI CPU some AVG 10) due to the execution of another task may refer to a ratio of delay time to a designated time (e.g., 10 seconds) due to the operation of another task, even for any one among the entire tasks working in the processor 350. The case in which the task execution delay time due to the execution of another task is high may be considered that the execution time of the application is delayed due to other external factors unrelated to the memory reclaim operation, and thus may not be regarded as meaningful data.

According to an embodiment, when an execution event of an application occurs, the processor 350 may identify a value recorded on a database or a data structure to identify a estimated duration of an execution sequence of an application corresponding to a period for which at least one memory management setting r elated to a memory reclaim operation is changed. The processor 350 may configure the estimated duration of the execution sequence of an application that is not pre-recorded among executable applications to a default value (e.g., 1 second), and then update the estimated duration to a value confirmed at the time of an execution event and execution completion of the application.

According to various embodiments, when the electronic device 300 is booted in an off state, the processor 350 may configure a first threshold value (e.g., watermark_low) and a second threshold value (e.g., watermark _high) related to a swap operation of the kernel swap daemon to be higher than the value designated by the operating system. The operating system (e.g., Android) may pre-store parameters related to various memory reclaim operations including the swap operation of the kernel swap daemon, and when there is no other configuration, the memory reclaim operation may be performed using the value configured in the operating system at boot time. Upon completion of the booting, the processor 350 may configure the first threshold value and the second threshold value related to the swap operation of the kernel swap daemon to be high while allowing a third threshold value (e.g., watermark_min) that triggers direct reclaim to be maintained at the value designated by the operating system. Accordingly, the difference between the first threshold value, the second threshold value, and the third threshold value may increase, and as a result, the time for the available capacity of the first memory 310 to reach the third threshold value at which direct reclaim triggers an operation may increase, thereby decreasing the probability that direct reclaim will operate.

According to an embodiment, the processor 350 may change the first threshold value and the second threshold value, based on the resolution (or number of pixels) of the display (e.g., the display module 160 of FIG. 1) of the electronic device 300 and the total capacity of the first memory 310. Equation 1 below is an example of a formula for changing the first threshold value and the second threshold value. New watermark_low = (number of pixels of display in the horizontal direction * number of pixels of display in the vertical direction * total memory capacity of the 32 bit graphic buffer * N) + total capacity (kbyte) of first memory * 0.01 + watermark_low configured in the OS New watermark_high = (number of pixels of display in the horizontal direction * number of pixels of the display in the vertical direction * total memory capacity of the 32 bit graphic buffer * N) + total capacity (kbyte) of first memory * 0.01 + watermark_high configured in the OS

In Equation 1, N is the number of graphic buffers and may be, for example, 3. When three 32 bit per pixel (bpp) buffers are used, the total memory capacity of the 32 bit graphics buffer may be multiplied by 4 * 3 / 1024 to calculate in kbytes.

According to various embodiments, operations performable in the electronic device 300, the first memory 310, and the second memory 330 are not limited to the examples described above.

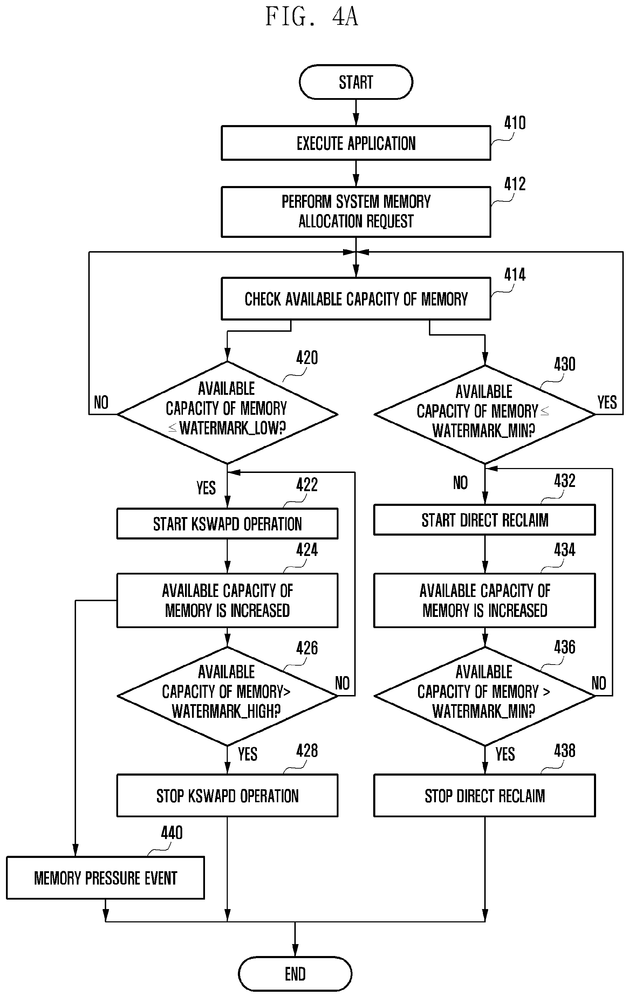

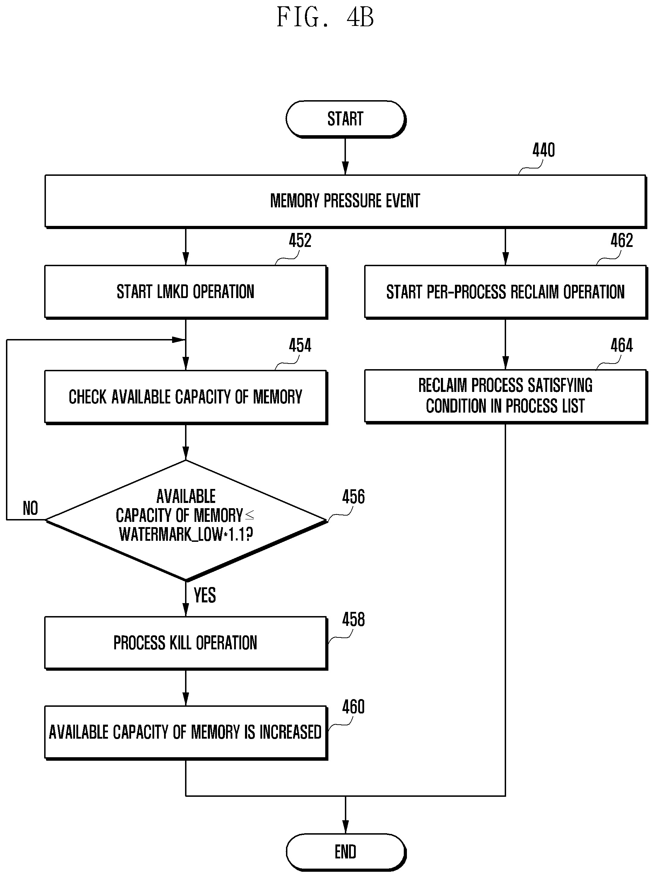

FIGS. 4A and 4B are flowcharts of a method for managing a memory of an electronic device according to various embodiments.

The illustrated method may be performed by an electronic device (e.g., the electronic device 300 of FIG. 3), and more specifically, by a processor (e.g., the processor 350 of FIG. 3) of the electronic device. Hereinafter, the description of the technical features previously described may be omitted. FIG. 4A illustrates the operations of kernel swap daemon (Kswald) and direct reclaim when an application is executed, and FIG. 4B illustrates the operations of low memory killer daemon (LMKD) (or low memory killer (LMK)) and per-process reclaim (PPR) when a memory pressure event occurs.

According to various embodiments, in operation 410, the electronic device may detect an execution event of an application. For example, when an execution event of a specific application occurs, the electronic device may identify the application to be executed, through a callback function.

According to various embodiments, in operation 412, the electronic device may identify a system memory allocation request. In order to load the process of the application to be executed onto the first memory (e.g., the first memory 310 of FIG. 3) (or non-volatile memory, RAM), the kernel may attempt to allocate the memory of the corresponding process by executing a function related to memory allocation.

According to various embodiments, in operation 414, the electronic device may check or identify available capacity (e.g., memfree) of the first memory. Here, the available capacity of the first memory may refer to capacity of a storage region in which data is not loaded or allocation to a currently running process is not achieved, among the entire storage region of the first memory. When the available capacity of the memory is insufficient, the swap operation of the kernel swap daemon (Kswapd) in operations 420 to 428 and the direct reclaim operation in operations 430 to 438 may be triggered. Operations 420 to 428 and operations 430 to 438 are independent operations, and only one of them may be selectively performed, or both operations may also be performed at least partially concurrently.

According to various embodiments, in operation 420, the electronic device may identify whether or not the available capacity of the first memory is less than or equal to a first threshold value (e.g., watermark_low). When the identified available capacity of the first memory is equal to or less than the first threshold value, in operation 422, kernel swap daemon may be activated to initiate a swap operation. The swap operation of the kernel swap daemon may include an operation of compressing process data in the first memory according to a compression algorithm configured in the system and storing the data in partition (e.g., zRAM) or a designated region of the first memory. In addition, the swap operation of the kernel swap daemon may include an operation of reclaiming memory by deleting a part (e.g., a clean page) of process data in the first memory.

According to various embodiments, in operation 424, the available capacity of the first memory may be increased according to the swap operation of the kernel swap daemon. The kernel swap daemon may perform the swap operation until the available capacity of the first memory reaches a second threshold value (e.g., watermark_high). According to an embodiment, the first threshold value and the second threshold value may be managed in kernel parameters (e.g., vm.min_free_kbytes and/or vm.extra_free_kbytes), and may be adjusted during the kernel swap daemon operation according to a system operation code.

According to various embodiments, in operation 426, the electronic device may identify whether or not the available capacity of the first memory exceeds the second threshold value. When the available capacity of the first memory exceeds the second threshold, the electronic device may stop the swap operation of the kernel swap daemon in operation 428.

According to various embodiments, in operation 430, the electronic device may identify whether or not the available capacity of the first memory is equal to or less than a third threshold value (e.g., watermark_min). Here, the third threshold value may be a value lower than the first threshold value and the second threshold value. When the identified available capacity of the first memory is equal to or less than the third threshold value, a direct reclaim operation may be initiated in operation 432. The direct reclaim is a part of codes included in the kernel swap daemon and may be an operation of directly reclaiming unused parts of processes in the first memory. According to an embodiment, when the available capacity of the first memory is equal to or less than the third threshold value, the electronic device may perform only the direct reclaim operation without performing the swap operation of the kernel swap daemon.

According to various embodiments, in operation 434, the available capacity of the first memory may be increased according to the direct reclaim operation. The electronic device may perform a swap operation until the available capacity of the first memory exceeds the third threshold value (e.g., watermark_min).

According to various embodiments, in operation 436, the electronic device may identify whether or not the available capacity of the first memory exceeds the third threshold, and, if so, may stop the direct reclaim operation in operation 438.

According to various embodiments, in operation 440, a memory pressure event (e.g., Vmpressure or pressure stall information (PSI)) may occur according to the efficiency of securing the available capacity of the memory during the swap operation (e.g., operation 422) of the kernel swap daemon and/or the direct reclaim operation (e.g., operation 432).

According to various embodiments, in operation 452, the electronic device may trigger low memory killer daemon (LMKD) in response to the memory pressure event. In operation 454, the low memory killer daemon may identify the available capacity of the first memory, and in operation 456, check or identify whether or not the available capacity of the first memory is equal to or less than a fourth threshold value. Here, the fourth value is a value higher than the first threshold value and the second threshold value, and may be, for example, configured to preferably be 1.1 times the first threshold value, but is not limited thereto.

According to various embodiments, when the available capacity of the first memory is equal to or less than the fourth threshold value, a process kill operation may be initiated by the low memory killer daemon in operation 458. When the available capacity of the first memory reaches the fourth threshold value, the low memory killer daemon may proceed to a kill condition identifying logic for terminating the process. According to an embodiment, the low memory killer daemon may identify whether the use of swap usage (e.g., SwapUsed) is sufficient, whether a specified time has elapsed since the previous process kill, and the strength of pressure stall information (PSI), and perform the process kill operation when a specified condition is satisfied. According to an embodiment, when the specified condition is satisfied and thus the process kill operation is determined to be performed, the low memory killer daemon may select one process to kill among the remaining processes with the highest score (e.g., OOM_SCORE_ADJ) in the process list, in order of app memory size resident set size (RSS) and/or least recently used (LRU) according to memory pressure level. The low memory killer daemon may secure available capacity of the memory by sending a termination signal (or kill signal) to the selected process. The available capacity of the first memory may be increased in operation 460 according to the termination of at least one process.

According to an embodiment, the low memory killer (LMK) may operate at least partially concurrently with the operation of the low memory killer daemon (LMKD), and the operation of the low memory killer may be substantially the same as that of the low memory killer daemon.

According to various embodiments, in operation 462, the electronic device may initiate a per-process reclaim operation in response to the memory pressure event. In operation 464, the electronic device may reclaim a process that satisfies a condition designated in the process list. A per-process reclaim (PPR) thread that performs the per-process reclaim may always operate in the user space, and may determine whether or not to reclaim the background process in the process list. For example, when the score (e.g., OOM_SCORE_ADJ) of a specific process is changed, the PPR thread may activate the PPR by file writing to the kernel or calling a kernel system call.

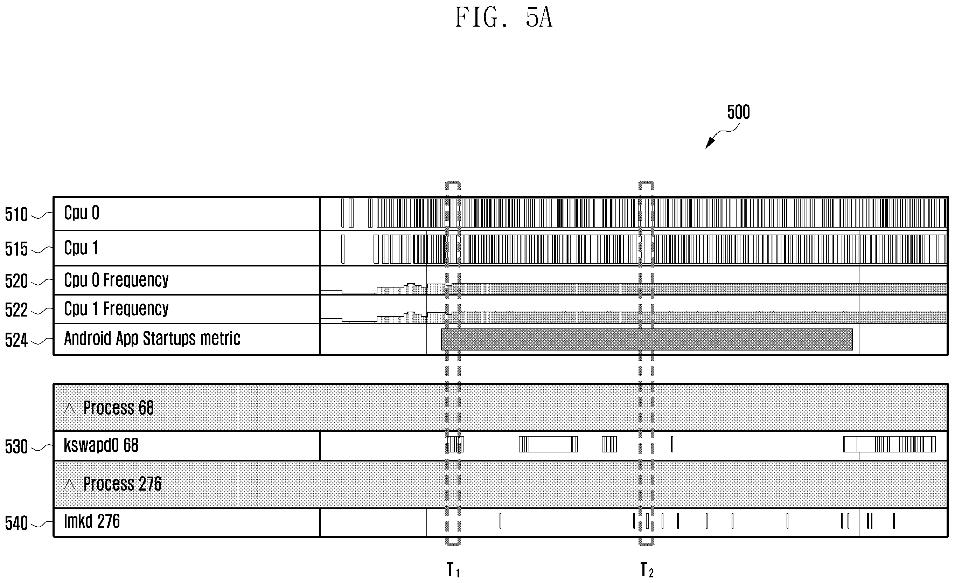

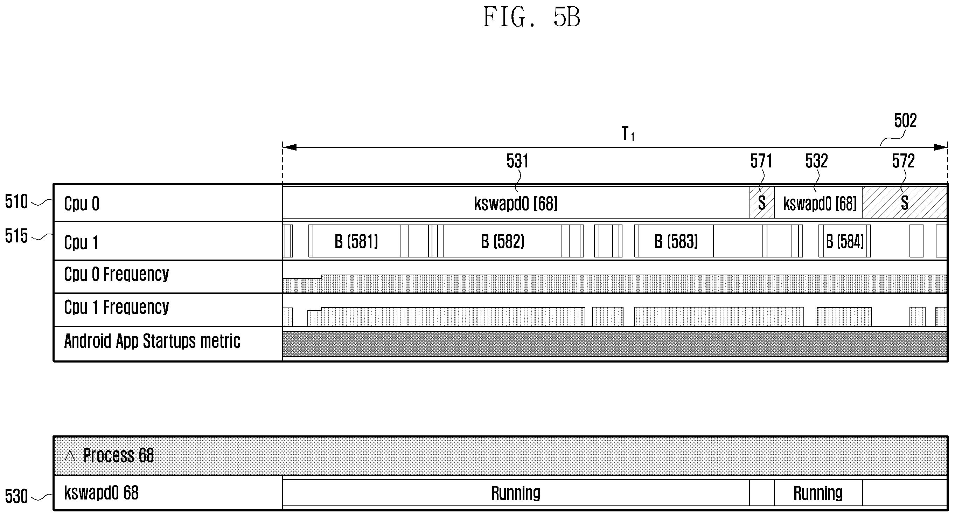

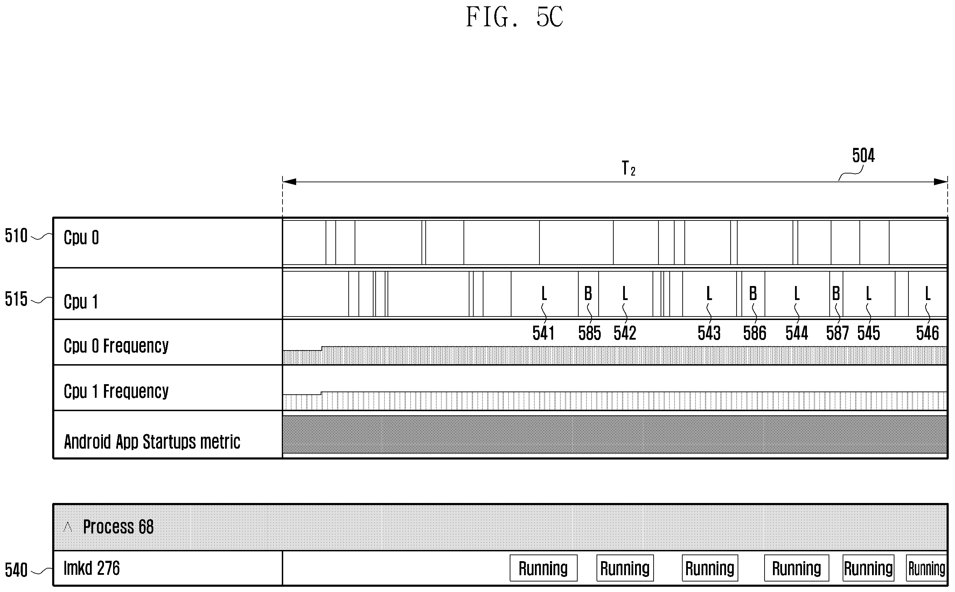

FIGS. 5A, 5B, and 5C are diagrams illustrating a usage status of a processor of an electronic device according to various embodiments.

Referring to FIG. 5A, the usage status of CPU0 and CPU1 of a processor (e.g., the processor of FIG. 3) is illustrated, and a task executed in each CPU is recorded as time slices.

Referring to FIG. 5A, a specific application (e.g., the contact application) may be identified in App startups metric 524 when executed, and the application may complete the execution on a processor (e.g., the processor 350 of FIG. 3) during the period of the execution which is recorded in the App startups metric 524. When the execution of the application starts, the kernel swap daemon 530 may operate. In the section where the entry of the application and the operation of the kernel swap daemon 530 overlap, the kernel swap daemon (Kswapd) 530 may occupy the processor (or CPU) and thus affect the entry of the application. In addition, in the section where the entry of the application and the operation of the low memory killer daemon 540 (LMKD) overlap, the low memory killer daemon 540 may occupy the processor (or CPU) and thus affect the entry of the application. T1 and T2 in FIG. 5A indicate a part of the time points at which the kernel swap daemon 530 and the low memory killer daemon 540 operate, at the execution time of the application.

Referring to FIG. 5B, the kernel swap daemon 530 may operate for about 10 ms in CPU0 510 during the T1 section. According to the execution of the contact application, SurfaceFlinger that generates an entry screen may operate, and the SurfaceFlinger may operate in CPU0 510. The CPU0 510 may perform kernel swap operations 531 and 532, and since the kernel swap operation has a high priority, the SurfaceFlinger may operate in sections 571 and 572 where the kernel swap operations are not performed, and accordingly, the operation of the SurfaceFlinger may be delayed. In addition, CPU1 515 may operate a binder of the contact application, and a part of the sections 581, 582, 583, and 584 in which the binder operates may be occupied by another task, and the operation of the binder in the CPU1 515 may also be delayed.

As noted from FIG. 5C, the low memory killer daemon 540 operates in several time sections 541, 542, 543, 544, 545, and 546 in the CPU1 515. Since the low memory killer daemon 540 has a high priority, the operating sections 585, 586, and 587 of the binder of the contact application running on CPU1 515 may be delayed by the operating sections 541, 542, 543, 544, 545, and 546 of the low memory killer daemon 540.

As described above, the operation of the processor may be occupied by the memory reclaim operation (e.g., the kernel swap daemon 530 and the low memory killer daemon 540) performed at the time of application execution, and since the priority of the memory reclaim operation is high during scheduling, the entry of the application may be delayed. Hereinafter, various embodiments in which the delay or the occurrence frequency of the memory reclaim operation is minimized when a new application is executed, thereby improving the entry speed of the application will be described.

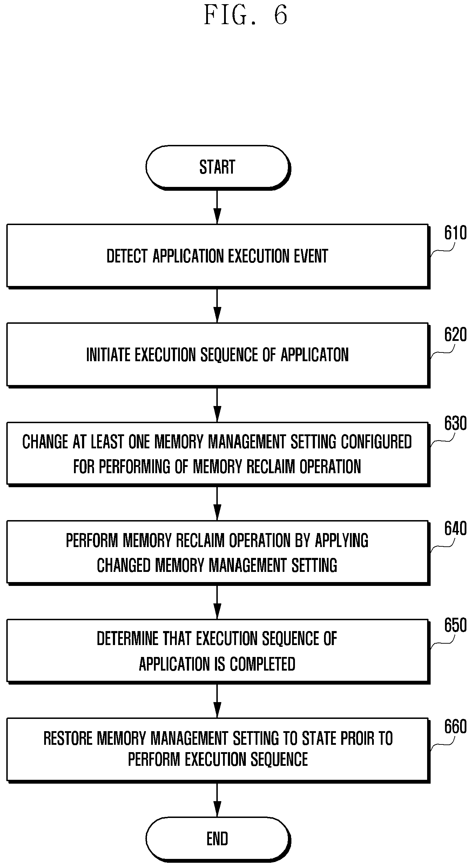

FIG. 6 is a flowchart of a method for managing a memory of an electronic device according to various embodiments.

The illustrated method may be performed by an electronic device (e.g., the electronic device 300 of FIG. 3), and more specifically, by a processor (e.g., the processor 350 of FIG. 3) of the electronic device. Hereinafter, the description of the technical features that have been described above may be omitted.

According to various embodiments, in operation 610, the electronic device may detect an execution event of an application. For example, the electronic device may execute a memory reclaim operation management thread and detect the execution event of the application through a callback function.

According to various embodiments, in operation 620, the electronic device may initiate sequence of instructions to launch an application (or execution sequence of an application) in response to detecting the execution event of the application. According to an embodiment, the execution sequence of the application may include at least one of loading files of the application stored in the second memory (e.g., a non-volatile memory, a storage) to the first memory (e.g., a volatile memory, RAM), generating at least one of an activity, a process, or a thread for executing the application 315, and generating (or drawing) an image data of the application.

According to various embodiments, in operation 630, the electronic device may change, to delay, stop, or decrease the memory reclaim operation, at least one memory management setting configured to execute the memory reclaim operation in response to an execution event of the application. The operation of changing the at least one memory management setting may be performed by a memory reclaim operation management thread. Here, at least one memory management setting may include threshold values (e.g., a first threshold value (watermark_low) and a second threshold value (watermark_high) of kernel swap daemon) that are a criterion for triggering a memory reclaim operation and/or information on whether or not a specific memory reclaim operation (e.g., per-process reclaim) is activated. According to an embodiment, the electronic device may identify a task execution delay time (e.g., PSI memory some Avg 10) due to the memory reclaim operation when an execution event (or command) of an application is detected, and the electronic device may change the at least one memory management setting when the delay time is less than or equal to the first reference time (e.g., 25) and/or when the available capacity of the first memory is greater than or equal to the reference capacity. According to an embodiment, the electronic device may change the at least one memory management setting in case that the current available capacity of the first memory is greater than the reference capacity (e.g., 200MB) when an application execution event (or command) is detected.

According to various embodiments, in operation 640, the electronic device may execute a memory reclaim operation by applying at least one changed system memory management setting.

According to an embodiment, when the available capacity of the first memory is equal to or less than the changed first threshold value, the electronic device may initiate a swap operation of kernel swap daemon (Kswapd), and when the configuration value reaches the changed second threshold value, the electronic device may stop the swap operation of the kernel swap daemon. Since the first threshold value and the second threshold value are changed to be lower than previously configured values, during the execution time of the application, the swap operation of the kernel swap daemon may be delayed and/or the occurrence frequency thereof may be reduced.

According to an embodiment, the electronic device may stop a per-process reclaim operation during the execution sequence of the application. The per-process reclaim operation may be performed without a threshold condition for the available capacity of the first memory 310 and be temporarily stopped to reduce resources generated by monitoring and reclaiming each process.

According to various embodiments, in operation 650, the electronic device may determine a completion of the execution sequence of the application. According to an embodiment, the electronic device may determine that the execution sequence of the application is completed, when a previously recorded estimated duration of the execution sequence of the application is elapsed. According to an another embodiment, the electronic device may determine that an execution sequence of an application is completed, when identifying a completion event of the execution sequence of the application.

The electronic device may record the execution time of the application on the second memory. According to an embodiment, at the time of executing a specific application, the electronic device may record the execution time of the corresponding application only when a delay time (e.g., PSI CPU some AVG 10) of task execution due to execution of another task is less than or equal to a designated value (e.g., 30). According to an embodiment, the execution time may be updated when the execution time of the corresponding application is already recorded and the execution time identified according to completion of execution of the application is different from the recorded execution time.

According to various embodiments, in operation 660, the electronic device may restore at least one memory management setting to a state prior to performing the execution sequence of the application, when it is determined that the execution sequence of the application is competed. For example, the electronic device (e.g., the memory reclaim operation management thread) may change the first threshold value and the second threshold value related to the swap operation of the kernel swap daemon back to the values configured before the execution event of the application is detected, and resume the per-process operation again.

The operations 650 and 660 may be performed at least partially concurrently, or the order thereof may be changed.

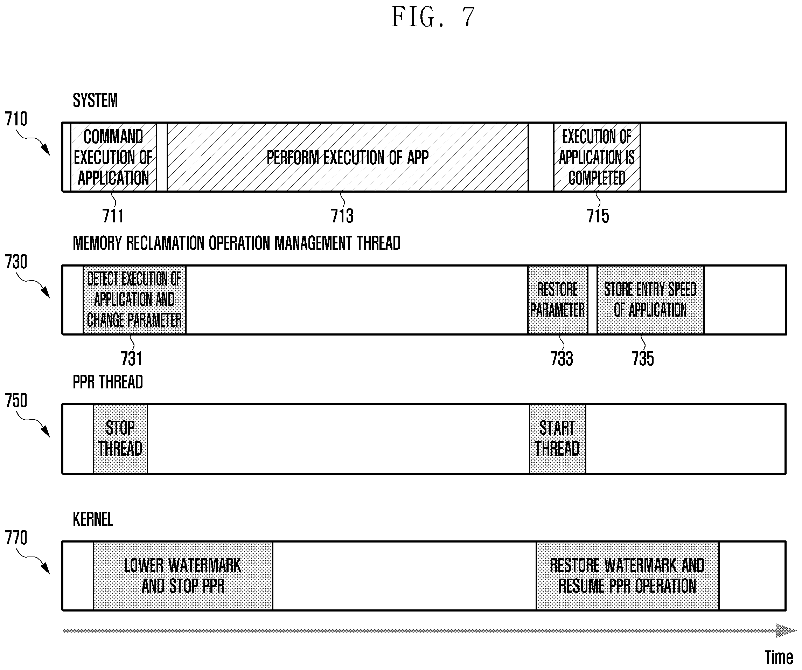

FIG. 7 is a diagram illustrating operations of a kernel and each thread when an application is executed according to various embodiments.

FIG. 7 illustrates the operation of each software component (e.g., the system 710, the memory reclaim operation management thread 730, the PPR thread 750, and the kernel 770) over time when the method of FIG. 6 is performed on an electronic device (e.g., the electronic device 300 of FIG. 3).

According to various embodiments, the system 710 (e.g., an Android system) may identify an application execution command. For example, an application execution command may be issued when a user of the electronic device selects an application icon.

According to various embodiments, the memory reclaim operation management thread 730 may detect an application execution command through a callback function in the Android framework (711). When an application execution command is detected, the memory reclaim operation management thread 730 may identify a task execution delay time (e.g., PSI memory some Avg 10) due to the memory reclaim operation of the electronic device and the current available capacity of the first memory. The memory reclaim operation management thread 730 may identify whether or not the task execution delay due to the memory reclaim operation is less than the reference value (e.g., 25) and/or whether or not the available capacity of the first memory is greater than or equal to the reference capacity (e.g., 200mb). Here, the reference value and reference capacity may be changed according to specifications and/or operating states of a processor and a memory of the electronic device. The memory reclaim operation management thread 730 may change at least one memory management setting related to the memory reclaim operation when the above condition is satisfied (731). According to an embodiment, the memory reclaim operation management thread 730 may issue a PPR stop command to the PPR thread 750, and command the kernel 770 to lower the first threshold value (watermark_low) and the second threshold value (watermark_high) related to the swap operation of the kernel swap daemon (Kswapd) to a designated ratio (e.g., 1/3). The memory reclaim operation management thread 730 may drive a timer that sets, as an expiration point, the estimated duration of execution sequence of the application to be executed at least partially concurrently (or later) with the transmission of the command to the PPR thread 750 and the kernel 770.

According to various embodiments, a per-process reclaim (PPR) thread may command the kernel 770 to stop a PPR operation currently in progress when receiving a PPR stop command from the memory reclaim operation management thread 730. The PPR thread 750 may transition to a standby state after issuing the command to stop the PPR operation.

According to various embodiments, according to the PPR stop command and the command to lower the first threshold value and the second threshold value, received from the memory reclaim operation management thread 730, the kernel 770 may stop the PPR operation, downwardly adjust the first threshold value, the second threshold value, and the fourth threshold value determined as a multiple of the first threshold value, and compare the currently available capacity of the first memory with the downwardly adjusted threshold values, thereby performing the operations of kernel swap daemon and/or low memory killer daemon (or low memory killer).

According to various embodiments, an application may be executed on the system 710 (713). For example, operations such as process generation and activity generation of the corresponding application may be performed.

According to various embodiments, when the configured timer expires, the memory reclaim operation management thread 730 may transfer a PPR operation resume command to the PPR thread 750, and transfer a restoration command of the first threshold value and the second threshold value to the kernel 770 (733).

According to various embodiments, the PPR thread 750 may perform the PPR operation again when receiving the PPR operation resume command from the memory reclaim operation management thread 730. When receiving the restoration command of the first threshold value and the second threshold value, the kernel 770 may perform the operations by comparing the available capacity of the first memory with the previously configured threshold value during the operations of the kernel swap daemon and the low memory killer daemon (or low memory killer).

According to various embodiments, when the execution of the application is completed (715), execution completion information may be transferred to the memory reclaim operation management thread 730 through a callback function, and the name and duration of execution sequence of the executed application (or entry speed) may be transferred thereto. The memory reclaim operation management thread 730 may identify, from the received execution time, whether the task execution delay time (e.g., PSI CPU some AVG 10) due to execution of another task is less than or equal to the designated reference value (e.g., 30), and store the duration of execution sequence, as a estimated duration, in an internal data structure or database of the memory reclaim operation management thread 730 (735) only when the delay time is less than or equal to the designated reference value. Here, the reference value (e.g., 30) compared with the task execution delay time (e.g., PSI CPU some AVG 10) due to execution of another task may be changed. The memory reclaim operation management thread 730 may store the cumulative average value of the execution time of the identified application to utilize the same as an estimated duration of execution sequence in the execution stage of the same application later.

As described above, the reason why it is necessary to store the duration of execution sequence of the application is that the memory reclaim operation needs to be delayed only by the time during which the application is completely loaded into the first memory. In addition, the reason is because, when the delay of the memory reclaim operation takes shorter than the execution time of the application, the effect of improving the entry speed of the application may be reduced, and conversely, when the memory reclaim operation takes longer than the execution time of the application, an unnecessary delay of the memory reclaim operation occurs, resulting in a memory shortage situation, which may be a factor in deteriorating the performance of the electronic device.

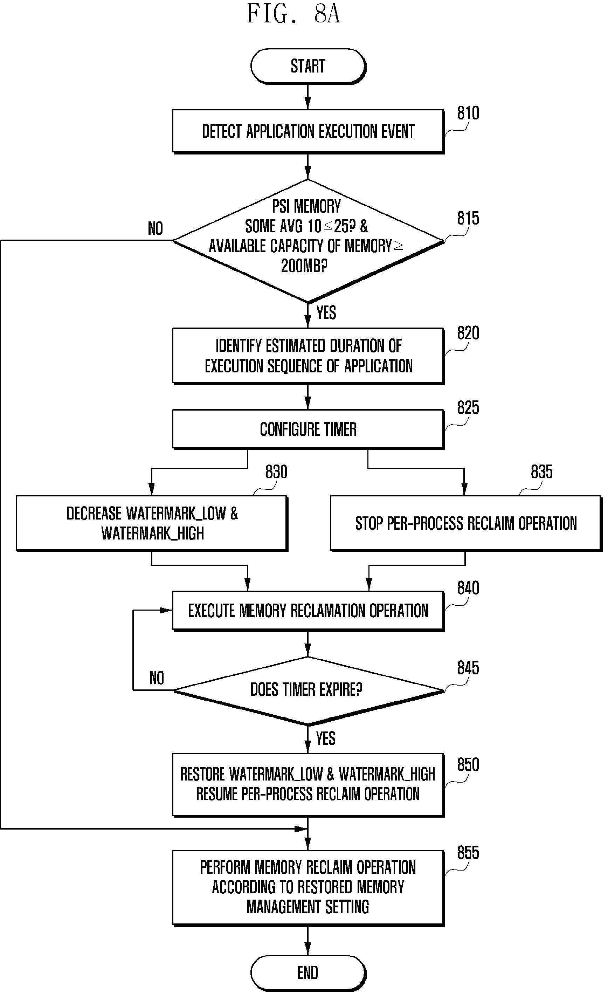

FIG. 8a is a flowchart of a method for managing a memory of an electronic device according to various embodiments.

The illustrated method may be performed by an electronic device (e.g., the electronic device 300 of FIG. 3), and more specifically, by a processor (e.g., the processor 350 of FIG. 3) of the electronic device. Hereinafter, the description of the technical features previously described may be omitted. The operation illustrated in FIG. 8a may include an operation of a memory reclaim operation management thread (e.g., the memory reclaim operation management thread 730 of FIG. 7) performed by the processor.

According to various embodiments, in operation 810, the electronic device may detect an execution event of an application. For example, the electronic device may execute a memory reclaim operation management thread and detect the execution event of the application through a callback function.

According to various embodiments, when an application execution event (or command) is detected, in operation 815, the electronic device may identify whether or not the task execution delay time (e.g., PSI memory some Avg 10) due to the memory reclaim operation is less than or equal to the reference time (e.g., 25) and/or whether or not the available capacity of the first memory is equal to or greater than the reference capacity (e.g., 200mb). Here, the task execution delay time (e.g., PSI memory some Avg 10) due to the memory reclaim operation may be the sum of the time delayed when at least one task in the CPU is delayed due to the kernel memory reclaim operation, during a designated time (e.g., 10 seconds), and may be expressed as a ratio (e.g., 0 to 100) of the delayed time to 10 seconds.

According to various embodiments, when the two conditions identified in operation 815 are satisfied, in operation 820, the electronic device may identify a estimated duration of the execution sequence of the application being executed. For example, the electronic device may identify whether or not a estimated duration of the execution sequence of an application to be executed is recorded in a database or a data structure (or a designated region of the second memory) within the memory reclaim operation management thread. In this case, a key may use information capable of specifying the corresponding application, such as a process name of an application. The value matching the key may be the estimated duration of the execution sequence (or entry speed) of the application, and when there is a key, the value matching the key may be transferred to the memory reclaim operation management thread. According to an embodiment, the estimated duration of an execution sequence of an application may be a duration of the execution sequence measured when the application is executed according to the second execution event, before execution of the application according to the first execution event.

According to various embodiments, in operation 825, the electronic device may configure a timer, based on the estimated duration of the execution sequence of the identified application. According to an embodiment, when the estimated duration of the execution sequence of the identified application is 1 second or less, the timer may be configured to 1 second, and may be configured to 3 seconds as a maximum value. Here, the minimum value of 1 second and the maximum value of 3 seconds may be changed, and when the estimated duration of the execution sequence of an application to be executed is not recorded, the timer may be configured to 1 second, which is a default value. According to an embodiment, the electronic device may change at least one memory management setting configured for the memory reclaim operation, to delay or stop the memory reclaim operation.

According to various embodiments, in operation 830, the electronic device may change, at least part of changing of the memory management setting, the first threshold value (watermark_low) and the second threshold value (watermark_high) to values lower than currently configured values according to a designated ratio (e.g., 1/3). Here, the first threshold may be the available capacity of the first memory that triggers the swap operation of the kernel swap daemon, and the second threshold may be the available capacity that terminates the swap operation of the kernel swap daemon. According to an embodiment, the electronic device may change the first threshold value and the second threshold value by using a designated file node (e.g., Extra_Free_kbytes) of the kernel. When the first threshold value and the second threshold value are lowered, the swap operation of the kernel swap daemon may be delayed and/or the occurrence frequency thereof may be reduced. In addition, since the fourth threshold value, which is determined as a multiple of the first threshold value, is also downwardly adjusted, the process kill operation of the low memory killer daemon (LMKD) (or low memory killer (LMK)) may be delayed and/or the occurrence frequency thereof may be reduced.

According to various embodiments, in operation 835, the electronic device may stop, at least part of changing of the memory management setting, per-process reclaim (PPR). Since the per-process reclaim operation triggers the swap operation of the kernel swap daemon, in order to stop the same, the operation may be stopped in code through file write to the kernel node enabling the entry of the application to be recognized. When there is no kernel node enabling the entry of the application to be recognized, a PPR thread performing per-process reclaim may be temporarily stopped.

According to an embodiment, operations 830 and 835 may be performed at least partially concurrently. Additionally, changing of the memory management setting may be maintained from a time point detecting an execution event of an application or initiating an execution sequence of the application, to a time point a timer configured according to an estimated duration of the execution sequence expires.

According to various embodiments, in operation 840, the electronic device may execute the memory reclaim operation according to a memory management setting changed by the memory reclaim operation management thread until the timer expires.

According to various embodiments, in operation 845, the electronic device may identify whether or not a set timer has expired. For example, the memory reclaim operation management thread may identify using device uptime whether the designated time in the timer has elapsed.

According to various embodiments, when the timer expires, the electronic device may restore the memory management setting to a state prior to performing the sequence of instructions, In operation 850, the electronic device may restore the first threshold value and the second threshold value to the previously configured values and may release the stop of the per-reclaim operation. According to an embodiment, in order to restart the per-reclaim operation, the electronic device may enable the operation to be resumed in code through file writing to a kernel node or may enable the PPR thread, which has been stopped, to be performed again when there is no kernel node.

According to various embodiments, in operation 855, the electronic device may perform a memory reclaim operation according to the restored memory management setting. The memory reclaim operation management thread may terminate the operation by the callback and wait for the execution of the next application.

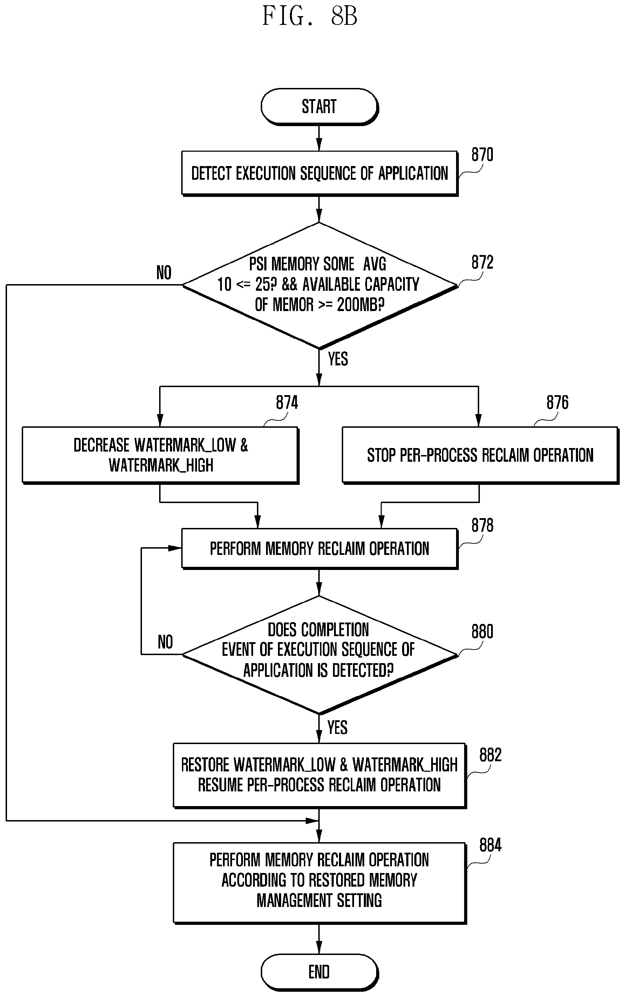

FIG. 8b is a flowchart of a method for managing a memory of an electronic device according to various embodiments.

The illustrated method may be performed by an electronic device (e.g., the electronic device 300 of FIG. 3), and more specifically, by a processor (e.g., the processor 350 of FIG. 3) of the electronic device. Hereinafter, the description of the technical features previously described may be omitted. The operation illustrated in FIG. 8b may include an operation of a memory reclaim operation management thread (e.g., the memory reclaim operation management thread 730 of FIG. 7) performed by the processor. Hereinafter, descriptions of operations that are same as operations of a method of FIG. 8a may be omitted.

According to various embodiments, in operation 870, the electronic device may may detect an execution event of an application. For example, the electronic device may execute a memory reclaim operation management thread and detect the execution event of the application through a callback function.

According to various embodiments, when an application execution event (or command) is detected, in operation 872, the electronic device may identify whether or not the task execution delay time (e.g., PSI memory some Avg 10) due to the memory reclaim operation is less than or equal to the reference time (e.g., 25) and/or whether or not the available capacity of the first memory is equal to or greater than the reference capacity (e.g., 200mb). Here, the task execution delay time (e.g., PSI memory some Avg 10) due to the memory reclaim operation may be the sum of the time delayed when at least one task in the CPU is delayed due to the kernel memory reclaim operation, during a designated time (e.g., 10 seconds), and may be expressed as a ratio (e.g., 0 to 100) of the delayed time to 10 seconds.

According to various embodiments, when the two conditions identified in operation 872 are satisfied, the electronic device may perform at least one of operation 874 and operation 876.

According to various embodiments, in operation 874, the electronic device may the electronic device may change, at least part of changing of the memory management setting, the first threshold value (watermark_low) and the second threshold value (watermark_high) to values lower than currently configured values according to a designated ratio (e.g., 1/3). Here, the first threshold may be the available capacity of the first memory that triggers the swap operation of the kernel swap daemon, and the second threshold may be the available capacity that terminates the swap operation of the kernel swap daemon. According to an embodiment, since the fourth threshold value, which is determined as a multiple of the first threshold value, is also downwardly adjusted, the process kill operation of the low memory killer daemon (LMKD) (or low memory killer (LMK)) may be delayed and/or the occurrence frequency thereof may be reduced.

According to various embodiments, in operation 876, the electronic device may stop, at least part of changing of the memory management setting, per process reclaim (PPR).

According to various embodiments, in operation 878, the electronic device may perform the memory reclaim operation according to the changed memory management setting by the memory reclaim operation management thread.

According to various embodiments, in operation 880, the electronic device may determine whether the execution sequence of the application is completed. According to an embodiment, the electronic device may recognize that a time point when the first screen of the application 350 is drawn as a time point when an execution sequence of the application is completed, and send the completion event of the execution sequence, through a callback function or message transmission, to a memory reclaim operation management thread. According to an embodiment, the electronic device may change the memory management setting and perform the memory reclaim operation using the changed memory management setting, like operations 874, 876, and/or 878, from a time point when the execution event of the application is detected or the execution sequence of the application is initiated to a time point when a completion event of the execution sequence is detected. Accordingly, frequency of occurrence of the memory reclaim operation may be reduced.

According to various embodiments, in response to detecting a completion event of execution sequence of the application, in operation 882, the electronic device may restore the first threshold value and the second threshold value to a previously configured value, and cancel the stop of the per process reclaim.

According to various embodiments, in operation 884, the electronic device may perform the memory reclaim operation with the restored memory management setting.

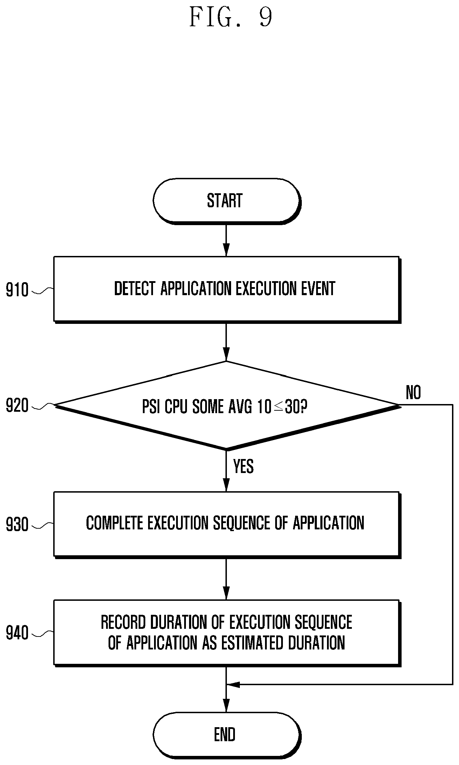

FIG. 9 is a flowchart of a method for recording an execution time of an application by an electronic device according to various embodiments.

The illustrated method may be performed by an electronic device (e.g., the electronic device 300 of FIG. 3), and more specifically, by a processor (e.g., the processor 350 of FIG. 3) of the electronic device. Hereinafter, the description of the technical features previously described may be omitted.

According to various embodiments, when a sequence of instructions to launch the application (or execution sequence of the application) is completed, the electronic device may be configured to record a duration of execution sequnce of the application in a database within the memory reclaim operation management thread or a designated region of the second memory.

According to various embodiments, in operation 910, the electronic device may detect an execution event of an application. For example, the electronic device may execute a memory reclaim operation management thread and detect an execution event of an application through a callback function.

According to various embodiments, when a specific application is executed, in operation 920, the electronic device may identify whether or not a task execution delay time (e.g., PSI CPU some AVG 10) due to execution of another task is equal to or less than a designated value (e.g., 30). The reason for identifying these conditions is not to save the execution time when the entry speed of the application is slowed down by external factors.

According to various embodiments, in operation 930, the electronic device may identify completion of execution sequences of the application. In operation 940, the electronic device may record a duration of the execution sequence of the application, as a estimated duration, in the second memory. For example, an execution record of the application may be recorded in log time, and the electronic device may store the value in a database or a data structure. According to an embodiment, the electronic device may record the execution time in a database or a data structure by matching a key as the name of a process and a value that matches the key as the estimated duration of the execution sequence of the application. According to an embodiment, the electronic device may configure the estimated duration of the execution sequence of the application to be between a minimum of 1 second and a maximum of 3 seconds, and record the execution time of the application measured in 1 second or less as 1 second.

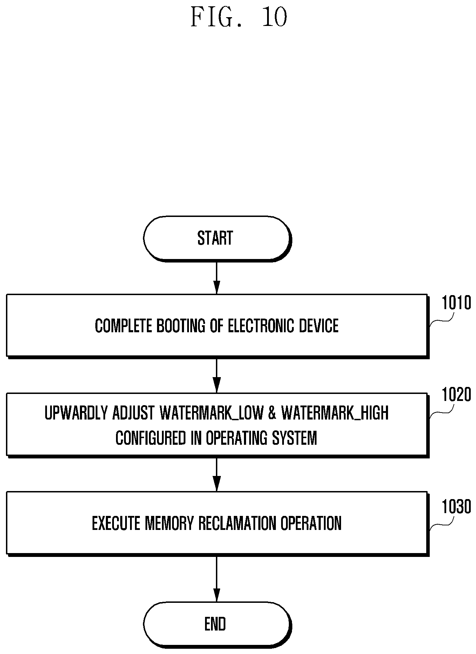

FIG. 10 is a flowchart of a method of adjusting a threshold value when an electronic device is booted, according to various embodiments.

The illustrated method may be performed by an electronic device (e.g., the electronic device 300 of FIG. 3), and more specifically, by a processor (e.g., the processor 350 of FIG. 3) of the electronic device. Hereinafter, the description of the technical features previously described may be omitted.

According to various embodiments, when the electronic device is booted, the electronic device may be configured to configure values higher than reference values designated by the operating system as a first threshold value and a second threshold value in relation to a swap operation of kernel swap daemon.

According to various embodiments, in operation 1010, the electronic device may recognize a booting completion time when booted for the first time.

According to various embodiments, in operation 1020, the electronic device may reconfigure the first threshold value and the second threshold value previously configured in the operating system to higher values. Here, the first threshold value may be the available capacity of the first memory that triggers the swap operation of the kernel swap daemon, and the second threshold may be the available capacity that terminates the swap operation of the kernel swap daemon. The operating system (e.g., Android) may pre-store a memory management settingrelated to various memory reclaim operations, including the swap behavior of the kernel swap daemon, and when there is no other configuration, the memory reclaim operation may be performed using the value configured in the operating system at boot time.

According to an embodiment, upon completion of the booting, the electronic device may configure the first threshold value and the second threshold value related to the swap operation of the kernel swap daemon to be high while allowing a third threshold value (e.g., watermark_min) that triggers direct reclaim to be maintained at the value designated by the operating system. Accordingly, the difference between the first threshold value, the second threshold value, and the third threshold value may increase, and as a result, the time for the available capacity of the first memory 310 to reach the third threshold value at which the direct reclaim triggers an operation may increase, thereby decreasing the probability that the direct reclaim will operate.

According to an embodiment, the electronic device may change the first threshold value and the second threshold value, based on the resolution (or number of pixels) of the display (e.g., the display module 160 of FIG. 1) of the electronic device and the total capacity of the first memory 310. Equation 1 below is an example of a formula for changing the first threshold value and the second threshold value. New watermark_low = (number of pixels of display in the horizontal direction * number of pixels of display in the vertical direction * total memory capacity of the 32 bit graphic buffer * N) + total capacity (kbyte) of first memory * 0.01 + watermark_low configured in the OS New watermark_high = (number of pixels of display in the horizontal direction * number of pixels of the display in the vertical direction * total memory capacity of the 32 bit graphic buffer * N) + total capacity (kbyte) of first memory * 0.01 + watermark_high configured in the OS

In Equation 1, N is the number of graphic buffers and may be, for example, 3. When three 32 bit per pixel (bpp) buffers are used, the total memory capacity of the 32 bit graphics buffer may be multiplied by 4 * 3 / 1024 to calculate in kbytes

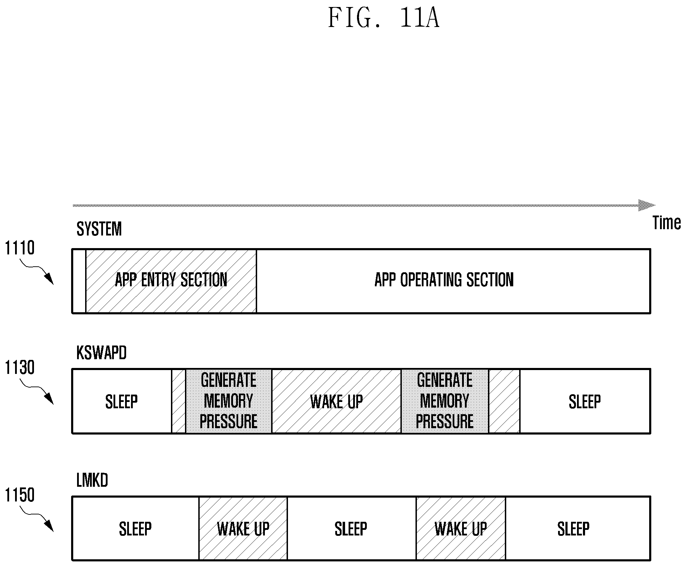

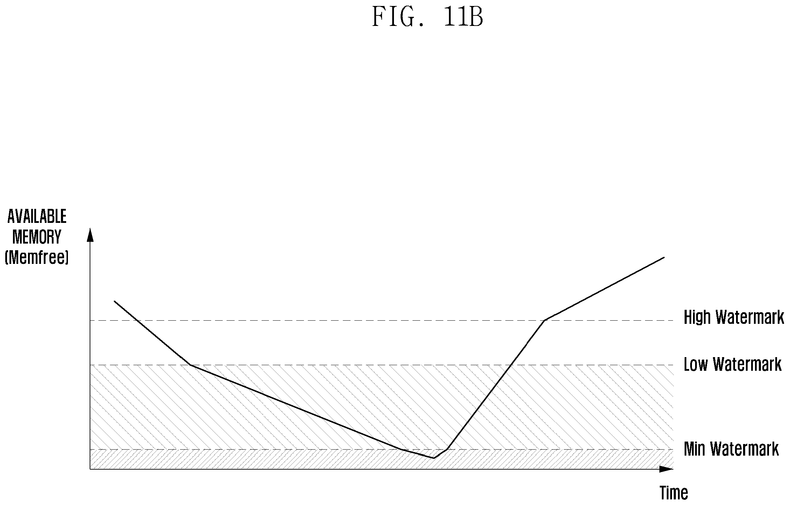

FIGS. 11A and 11B are diagrams illustrating available capacity of a memory when managing a memory according to a comparative example.

FIG. 11A illustrates an operation in the case where a memory reclaim operation is executed using a previously configured memory management setting even at the time of application execution without an operation of a memory reclaim operation management thread disclosed in this disclosure.

Referring to FIG. 11A, when an application is executed, an operation (e.g., process generation, activity generation) for executing an application may be performed on the system 1110 (e.g., Android system). When the above operation is performed in the entry section of the application, the available capacity of the first memory may be reduced.

The kernel swap daemon 1130 (kernel swap daemon, Kswapd) may be woken up when the available capacity of the memory (e.g., the first memory 310 of FIG. 3) falls to the first threshold value or less during operation in the sleep state. For example, the swap operation of the kernel swap daemon may include an operation of compressing process data in the first memory according to a compression algorithm configured in the system and storing the data on a partition (e.g., zRAM) or a designated region of the first memory. In addition, the swap operation of the kernel swap daemon may include an operation of reclaiming memory by deleting a part (e.g., a clean page) of process data in the first memory. A memory pressure event (e.g., Vmpressure or pressure stall information (PSI)) may occur according to the efficiency of securing the available capacity of the memory during the swap operation of the kernel swap daemon 1103 and/or the reclaim operation.

The kernel swap daemon 1130 may perform a swap operation until the available capacity of the memory reaches the second threshold value.

The low memory killer daemon 1150 (LMKD) may be woken up according to a memory pressure event. The low memory killer daemon 1150 may be woken up and may terminate (or kill) a process when the available capacity of the memory is less than or equal to the fourth threshold value. The low memory killer daemon may select one process to kill among the remaining processes with the highest score (e.g., OOM_SCORE_ ADJ) in the process list, in order of app memory size resident set size (RSS) and/or least recently used (LRU) according to memory pressure level.

Referring to FIG. 11A, the kernel swap daemon 1130 and the low memory killer may be woken up to operate even in the entry section (or execution sequence section) of an application, thereby affecting the entry speed of the application.

Referring to FIG. 11B, the available capacity of the memory may be reduced for allocation to a process of an application in the entry section of the application. However, when the available capacity of the memory reaches the first threshold value (watermark_low), the speed of decrease in the available capacity of the memory may be slowed down by the swap operation of the kernel swap daemon 1130, and when the available capacity of the memory reaches the second threshold value (watermark_high), the available capacity of the memory may be recovered again by the direct reclaim operation. Here, the time point at which the kernel swap daemon 1130 is woken up due to the available capacity of the memory having reached the first threshold value (watermark_low) corresponds to the entry section in which the execution of the application has not been completed. In this case, the kernel swap daemon 1130 may have a high priority during CPU scheduling thereof, thereby affecting the entry speed of the application.

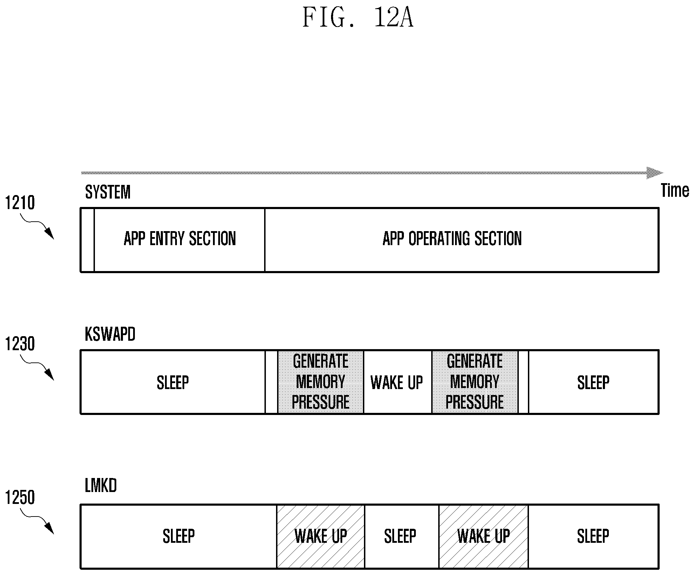

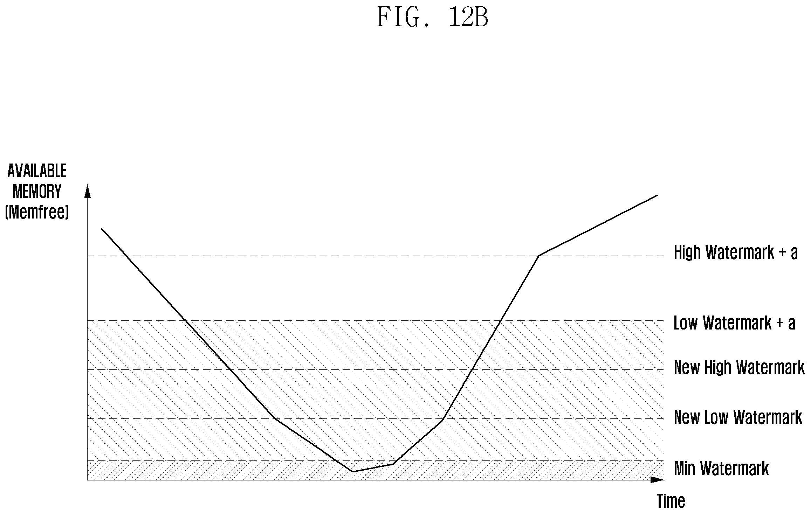

FIGS. 12A and 12B are diagrams illustrating available capacity of a memory when memory is managed according to various embodiments.

According to various embodiments, an electronic device (e.g., the electronic device 300 of FIG. 3) may configure a first threshold value and a second threshold to be higher than values (e.g., watermark_low and watermark_high of FIG. 11B) designated by the operating system at boot time (e.g., watermark_low + α, watermark_high + α). Accordingly, the operating time of the kernel swap daemon 1230 may be advanced, and therefore, the available capacity of the memory may be quickly secured in a situation other than the entry section of the application.

According to various embodiments, when an application execution event occurs, the electronic device may downwardly adjust the first threshold value and the second threshold value to values to be lower than previously configured values during the entry section (or execution sequence section) of the application. (e.g., new watermark_low, new watermark_high). Accordingly, the time point at which the available capacity of the memory reaches the adjusted first threshold value may be delayed, and therefore, the kernel swap daemon 1230 may be woken up late to operate in the entry section of the application. In addition, the memory pressure event (e.g., Vmpressure or pressure stall information (PSI)) may occur late by the kernel swap daemon 1230, and therefore, the low memory killer daemon 1250 (LMKD) may be also woken up late.

Referring to FIG. 12B, after booting, the electronic device may perform a swap operation of the kernel swap daemon 1230, based on the upwardly adjusted first threshold value (high watermark_low) and second threshold value (high watermark_high). After that, when the application is executed, the swap operation of the kernel swap daemon 1230 may be started late as the first threshold value and the second threshold value are downwardly adjusted in the entry section of the application. Accordingly, the speed at which the available capacity of the memory is reclaimed may be slower compared with the comparative example of FIG. 11A.

According to various embodiments, the operation of the kernel swap daemon 1230, which has a high priority during CPU scheduling, may be delayed in the entry section of the application, and therefore, the operation for entry of the application may be less affected compared with the comparative example of FIG. 11A.

An electronic device according to various embodiments of the disclosure may include a first memory, a second memory having characteristics different from characteristics of the first memory, and a processor operatively connected to the first memory and the second memory.

According to various embodiments of the disclosure, the processor may be configured to perform, based on an amount of available space in the first memory, a memory reclaim operation to make more space available in the first memory.

According to an embodiment, the processor may, in response to a first execution event of an application stored in the second memory, perform a sequence of instructions to launch the application and change at least one memory management setting configured for the memory reclaim operation to delay or stop the memory reclaim operation, and based on completing performing the sequence of instructions to launch the application, restore the at least one memory management setting to a state prior to performing the sequence of instructions to launch the application.

According to an embodiment, the processor may be further configured to, in response to a second execution event of the application, perform a sequence of instructions to launch the application, based on completing performing the sequence of instructions to launch the application initiated by the second execution event, record a duration of the sequence of instructions to launch the application as a estimated duration of the sequence of instructions to launch the application, the estimated duration comprises length of time from a time point of the second execution event to a time point of the completion of the sequence of instructions to launch the application, and determine that the sequence of instructions to launch the application initiated by the first execution event is completed, when the estimated duration is elapsed from the first execution event.

According to an embodiment, the processor may be further configured to determine that the sequence of instructions to launch the application is completed, when identifying a completion event of the sequence of instructions to launch the application.

According to an embodiment, the memory reclaim operation may include a swap operation of a kernel swap daemon, and the swap operation of the kernel swap daemon is initiated when an amount of the available space of the first memory is less than or equal to a first threshold value and terminated when the amount of the available space of the first memory reaches a second threshold value higher than the first threshold value due to the swap operation, and the processor may be configured, to delay the swap operation, to decrease at least one of the first threshold value and the second threshold value, as a part of the changing of the at least one memory management setting in response to the first execution event of the application.

According to an embodiment, the memory reclaim operation may include a process kill operation of low memory killer daemon, and the process kill operation of the low memory killer daemon may be initiated when an amount of the available space of the first memory is less than or equal to a third threshold value higher than the second threshold value, and the processor may be configured, to delay the process kill operation, to decrease the third threshold value, as a part of the changing of the at least one memory management setting, in response to the first execution event of the application.

According to an embodiment, a direct reclaim operation of the kernel swap daemon may be initiated when the amount of the available space of the first memory is less than or equal to a fourth threshold value lower than the first threshold value, and the processor may be configured not to change the fourth threshold value even if the at least one memory management setting is changed according to the first execution event of the application.

According to an embodiment, the processor may be configured to configure the first threshold value with a value higher than a default value in relation to the first threshold value designated by an operating system of the electronic device, when the electronic device is booted, so that difference of the first threshold value and the fourth threshold value is increased.

According to an embodiment, the memory reclaim operation may include a per-process reclaim operation of kernel swap daemon, and the processor may be configured to stop the per-process reclaim operation in response to detect the first execution event, as a part of the changing of the at least one memory management setting.

According to an embodiment, if the at least one memory management setting is changed, operation frequency of the memory reclaim operation may be reduced as an initiation of the memory reclaim operation is delayed or stopped.

According to an embodiment, the processor may be further configured to change the at least one memory management setting in case that a task execution delay time due to the memory reclaim operation is less than or equal to a first reference time and/or in case that an amount of the available space of the first memory is greater than or equal to a reference value.

According to an embodiment, the processor may be further configured to record the duration of the sequence of instructions to launch the application as the estimated duration, in case that a task execution delay time due to execution of another task during the sequence of instructions to launch the application is less than or equal to a second reference time.

According to an embodiment, the sequence of instructions to launch the application may include at least one of loading files of the application stored in the second memory to the first memory, generating at least one of an activity, a process, or a thread for executing the application, and generating an image data of the application.

A method for managing a memory of an electronic device may includes performing, based on an amount of available space in a first memory, a memory reclaim operation to make more space available in the first memory, in response to a first execution event of an application stored in the second memory, performing a sequence of instructions to launch the application, changing at least one memory management setting configured for the memory reclaim operation to delay or stop the memory reclaim operation, and based on completing performing the sequence of instructions to launch the application, restoring the at least one memory management setting to a state prior to performing the sequence of instructions to launch the application.

According to an embodiment, the method may further includes in response to a second execution event of the application, performing a sequence of instructions to launch the application, based on completing performing the sequence of instructions to launch the application initiated by the second execution event, recording a duration of the sequence of instructions to launch the application as a estimated duration of the sequence of instructions to launch the application, the estimated duration comprises length of time from a time point of the second execution event to a time point of the completion of the sequence of instructions to launch the application, and determining that the sequence of instructions to launch the application initiated by the first execution event is completed, when the estimated duration is elapsed from the first execution event.

According to an embodiment, the memory reclaim operation may include a swap operation of a kernel swap daemon, and the swap operation of the kernel swap daemon may be initiated when an amount of the available space of the first memory is less than or equal to a first threshold value and terminated when the amount of the available space of the first memory reaches a second threshold value higher than the first threshold value due to the swap operation, and the changing of the at least one memory management setting may includes decreasing at least one of the first threshold value and the second threshold value, as a part of the changing of the at least one memory management setting, in response to the first execution event of the application.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first memory (310);
a second memory (330) having characteristics different from characteristics of the first memory (310); and
a processor (350) operatively connected to the first memory (310) and the second memory (330),
wherein the processor (350) is configured to:
perform, based on an amount of available space in the first memory (310), a memory reclaim operation to make more space available in the first memory (310);
in response to a first execution event of an application stored in the second memory (330), perform a sequence of instructions to launch the application and change at least one memory management setting configured for the memory reclaim operation to delay or stop the memory reclaim operation; and
based on completing performing the sequence of instructions to launch the application, restore the at least one memory management setting to a state prior to performing the sequence of instructions to launch the application,
wherein if the at least one memory management setting is changed, operation frequency of the memory reclaim operation is reduced as an initiation of the memory reclaim operation is delayed or stopped.

2. The electronic device of claim **1,** wherein the processor (350) is further configured to:
in response to a second execution event of the application, perform a sequence of instructions to launch the application,
based on completing performing the sequence of instructions to launch the application initiated by the second execution event, record a duration of the sequence of instructions to launch the application as a estimated duration of the sequence of instructions to launch the application, the estimated duration comprises length of time from a time point of the second execution event to a time point of the completion of the sequence of instructions to launch the application, and
determine that the sequence of instructions to launch the application initiated by the first execution event is completed, when the estimated duration is elapsed from the first execution event.

3. The electronic device of claim 1, wherein the processor (350) is further configured to:
determine that the sequence of instructions to launch the application is completed, when identifying a completion event of the sequence of instructions to launch the application.

4. The electronic device of claim 1,
wherein the memory reclaim operation comprises a swap operation of a kernel swap daemon, and wherein the swap operation of the kernel swap daemon is initiated when an amount of the available space of the first memory (310) is less than or equal to a first threshold value and terminated when the amount of the available space of the first memory (310) reaches a second threshold value higher than the first threshold value due to the swap operation, and
wherein the processor (350) is configured, to delay the swap operation, to decrease at least one of the first threshold value and the second threshold value, as a part of the changing of the at least one memory management setting in response to the first execution event of the application.

5. The electronic device of claim 1,
wherein the memory reclaim operation comprises a process kill operation of low memory killer daemon, and
wherein the process kill operation of the low memory killer daemon is initiated when an amount of the available space of the first memory (310) is less than or equal to a third threshold value higher than the second threshold value; and
wherein the processor (350) is configured, to delay the process kill operation, to decrease the third threshold value, as a part of the changing of the at least one memory management setting, in response to the first execution event of the application.

6. The electronic device of any one of claims 5,
wherein a direct reclaim operation of the kernel swap daemon is initiated when the amount of the available space of the first memory (310) is less than or equal to a fourth threshold value lower than the first threshold value; and
wherein the processor (350) is configured not to change the fourth threshold value even if the at least one memory management setting is changed according to the first execution event of the application.

7. The electronic device of claim 5,
wherein the processor (350) is configured to configure the first threshold value with a value higher than a default value in relation to the first threshold value designated by an operating system of the electronic device, when the electronic device is booted, so that difference of the first threshold value and the fourth threshold value is increased.

8. The electronic device of one of claims 1 to 7,
wherein the memory reclaim operation comprises a per-process reclaim operation of kernel swap daemon, and
wherein the processor (350) is configured to stop the per-process reclaim operation in response to detect the first execution event, as a part of the changing of the at least one memory management setting.

9. The electronic device of one of claims 1 to 8,
wherein the processor (350) is further configured to change the at least one memory management setting in case that a task execution delay time due to the memory reclaim operation is less than or equal to a first reference time and/or in case that an amount of the available space of the first memory (310) is greater than or equal to a reference value.

10. The electronic device of claims 2,
wherein the processor (350) is further configured to
record the duration of the sequence of instructions to launch the application as the estimated duration, in case that a task execution delay time due to execution of another task during the sequence of instructions to launch the application is less than or equal to a second reference time.

11. The electronic device of any one of claims 1 to 10,
wherein the sequence of instructions to launch the application comprises at least one of:
loading files of the application stored in the second memory (330) to the first memory (310),
generating at least one of an activity, a process, or a thread for executing the application, and
generating an image data of the application.

12. A method for managing a memory of an electronic device, the method comprising:
performing, based on an amount of available space in a first memory (310), a memory reclaim operation to make more space available in the first memory (310);
in response to a first execution event of an application stored in the second memory (330), performing a sequence of instructions to launch the application;
changing at least one memory management setting configured for the memory reclaim operation to delay or stop the memory reclaim operation; and
based on completing performing the sequence of instructions to launch the application, restoring the at least one memory management setting to a state prior to performing the sequence of instructions to launch the application,
wherein if the at least one memory management setting is changed, operation frequency of the memory reclaim operation is reduced as an initiation of the memory reclaim operation is delayed or stopped.

13. The method of claim 12, further comprising:
in response to a second execution event of the application, performing a sequence of instructions to launch the application;
based on completing performing the sequence of instructions to launch the application initiated by the second execution event, recording a duration of the sequence of instructions to launch the application as a estimated duration of the sequence of instructions to launch the application, the estimated duration comprises length of time from a time point of the second execution event to a time point of the completion of the sequence of instructions to launch the application, and
determining that the sequence of instructions to launch the application initiated by the first execution event is completed, when the estimated duration is elapsed from the first execution event.

14. The method of claim 12,
wherein the memory reclaim operation comprises a swap operation of a kernel swap daemon, and the swap operation of the kernel swap daemon is initiated when an amount of the available space of the first memory (310) is less than or equal to a first threshold value and terminated when the amount of the available space of the first memory (310) reaches a second threshold value higher than the first threshold value due to the swap operation, and
wherein changing of the at least one memory management setting comprises:
decreasing at least one of the first threshold value and the second threshold value, as a part of the changing of the at least one memory management setting, in response to the first execution event of the application.

## Patentansprüche

1. Elektronische Vorrichtung, die Folgendes umfasst:
einen ersten Speicher (310);
einen zweiten Speicher (330), der Eigenschaften aufweist, die sich von den Eigenschaften des ersten Speichers (310) unterscheiden; und
einen Prozessor (350), der mit dem ersten Speicher (310) und dem zweiten Speicher (330) operativ verbunden ist,
wobei der Prozessor (350) zu Folgendem konfiguriert ist:
Ausführen einer Speicherrückgewinnungsoperation basierend auf einer Menge von verfügbarem Platz in dem ersten Speicher (310), um mehr Platz in dem ersten Speicher (310) verfügbar zu machen;
als Reaktion auf ein erstes Ausführungsereignis einer Anwendung, die in dem zweiten Speicher (330) gespeichert ist, Ausführen einer Sequenz von Anweisungen zum Starten der Anwendung und Ändern mindestens einer für die Speicherrückgewinnungsoperation konfigurierten Speicherverwaltungseinstellung, um die Speicherrückgewinnungsoperation zu verzögern oder zu stoppen; und
basierend auf dem Abschluss des Ausführens der Sequenz von Anweisungen zum Starten der Anwendung, Wiederherstellen der mindestens einen Speicherverwaltungseinstellung in einen Zustand vor dem Ausführen der Sequenz von Anweisungen zum Starten der Anwendung,
wobei die Betriebsfrequenz der Speicherrückgewinnungsoperation reduziert wird, wenn die mindestens eine Speicherverwaltungseinstellung geändert wird, da eine Initiierung der Speicherrückgewinnungsoperation verzögert oder gestoppt wird.

2. Elektronische Vorrichtung nach Anspruch 1, wobei der Prozessor (350) ferner zu Folgendem konfiguriert ist:
als Reaktion auf ein zweites Ausführungsereignis der Anwendung, Ausführen einer Sequenz von Anweisungen zum Starten der Anwendung,
basierend auf dem Abschluss des Ausführens der Sequenz von Anweisungen zum Starten der Anwendung, die durch das zweite Ausführungsereignis initiiert wurde, Aufzeichnen einer Dauer der Sequenz von Anweisungen zum Starten der Anwendung als eine geschätzte Dauer der Sequenz von Anweisungen zum Starten der Anwendung, wobei die geschätzte Dauer die Zeitdauer von einem Zeitpunkt des zweiten Ausführungsereignisses bis zu einem Zeitpunkt des Abschlusses der Sequenz von Anweisungen zum Starten der Anwendung umfasst, und
Bestimmen, dass die Sequenz von Anweisungen zum Starten der Anwendung, die durch das erste Ausführungsereignis initiiert wurde, abgeschlossen ist, wenn die geschätzte Dauer seit dem ersten Ausführungsereignis verstrichen ist.

3. Elektronische Vorrichtung nach Anspruch 1, wobei der Prozessor (350) ferner zu Folgendem konfiguriert ist:
Bestimmen, dass die Sequenz von Anweisungen zum Starten der Anwendung abgeschlossen ist, wenn ein Abschlussereignis der Sequenz von Anweisungen zum Starten der Anwendung identifiziert wird.

4. Elektronische Vorrichtung nach Anspruch 1,
wobei die Speicherrückgewinnungsoperation eine Auslagerungsoperation eines Kernel-Auslagerungs-Daemons umfasst, und wobei die Auslagerungsoperation des Kernel-Auslagerungs-Daemons initiiert wird, wenn eine Menge des verfügbaren Platzes des ersten Speichers (310) kleiner als oder gleich einem ersten Schwellenwert ist, und beendet wird, wenn die Menge des verfügbaren Platzes des ersten Speichers (310) aufgrund der Auslagerungsoperation einen zweiten Schwellenwert erreicht, der höher als der erste Schwellenwert ist, und
wobei der Prozessor (350) konfiguriert ist, um die Auslagerungsoperation zu verzögern, um den ersten Schwellenwert und/oder den zweiten Schwellenwert als Teil der Änderung der mindestens einen Speicherverwaltungseinstellung als Reaktion auf das erste Ausführungsereignis der Anwendung zu verringern.

5. Elektronische Vorrichtung nach Anspruch 1,
wobei die Speicherrückgewinnungsoperation eine Prozessbeendigungsoperation eines Low-Memory-Killer-Daemons umfasst, und
wobei die Prozessbeendigungsoperation des Low-Memory-Killer-Daemons initiiert wird, wenn eine Menge des verfügbaren Platzes des ersten Speichers (310) kleiner als oder gleich einem dritten Schwellenwert ist, der höher als der zweite Schwellenwert ist; und
wobei der Prozessor (350) konfiguriert ist, um die Prozessbeendigungsoperation zu verzögern, um den dritten Schwellenwert als Teil der Änderung der mindestens einen Speicherverwaltungseinstellung als Reaktion auf das erste Ausführungsereignis der Anwendung zu verringern.

6. Elektronische Vorrichtung nach einem der Ansprüche 5,
wobei eine direkte Rückgewinnungsoperation des Kernel-Auslagerungs-Daemons initiiert wird, wenn die Menge des verfügbaren Platzes des ersten Speichers (310) kleiner als oder gleich einem vierten Schwellenwert ist, der niedriger als der erste Schwellenwert ist; und
wobei der Prozessor (350) konfiguriert ist, um den vierten Schwellenwert nicht zu ändern, auch wenn die mindestens eine Speicherverwaltungseinstellung gemäß dem ersten Ausführungsereignis der Anwendung geändert wird.

7. Elektronische Vorrichtung nach Anspruch 5,
wobei der Prozessor (350) konfiguriert ist, um den ersten Schwellenwert mit einem Wert zu konfigurieren, der höher als ein Standardwert in Bezug auf den ersten Schwellenwert ist, der von einem Betriebssystem der elektronischen Vorrichtung bestimmt wird, wenn die elektronische Vorrichtung gebootet wird, so dass die Differenz zwischen dem ersten Schwellenwert und dem vierten Schwellenwert erhöht wird.

8. Elektronische Vorrichtung nach einem der Ansprüche 1 bis 7,
wobei die Speicherrückgewinnungsoperation eine prozessbezogene Rückgewinnungsoperation des Kernel-Auslagerungs-Daemons umfasst, und
wobei der Prozessor (350) konfiguriert ist, um die prozessbezogene Rückgewinnungsoperation als Reaktion auf das Erkennen des ersten Ausführungsereignisses als Teil der Änderung der mindestens einen Speicherverwaltungseinstellung zu stoppen.

9. Elektronische Vorrichtung nach einem der Ansprüche 1 bis 8,
wobei der Prozessor (350) ferner konfiguriert ist, um die mindestens eine Speicherverwaltungseinstellung zu ändern, falls eine Verzögerungszeit der Aufgabenausführung aufgrund der Speicherrückgewinnungsoperation kleiner als oder gleich einer ersten Referenzzeit ist und/oder falls eine Menge des verfügbaren Platzes des ersten Speichers (310) größer als oder gleich einem Referenzwert ist.

10. Elektronische Vorrichtung nach Anspruch 2,
wobei der Prozessor (350) ferner konfiguriert ist, um die Dauer der Sequenz von Anweisungen zum Starten der Anwendung als die geschätzte Dauer aufzuzeichnen, falls eine Verzögerungszeit der Aufgabenausführung aufgrund der Ausführung einer anderen Aufgabe während der Sequenz von Anweisungen zum Starten der Anwendung kleiner als oder gleich einer zweiten Referenzzeit ist.

11. Elektronische Vorrichtung nach einem der Ansprüche 1 bis 10,
wobei die Sequenz von Anweisungen zum Starten der Anwendung mindestens eines von Folgendem umfasst:
Laden von in dem zweiten Speicher (330) gespeicherten Dateien der Anwendung in den ersten Speicher (310),
Erzeugen einer Aktivität, eines Prozesses und/oder eines Threads zum Ausführen der Anwendung, und
Erzeugen von Bilddaten der Anwendung.

12. Verfahren zum Verwalten eines Speichers einer elektronischen Vorrichtung, wobei das Verfahren Folgendes umfasst:
Ausführen einer Speicherrückgewinnungsoperation basierend auf einer Menge von verfügbarem Platz in einem ersten Speicher (310), um mehr Platz in dem ersten Speicher (310) verfügbar zu machen;
als Reaktion auf ein erstes Ausführungsereignis einer in dem zweiten Speicher (330) gespeicherten Anwendung, Ausführen einer Sequenz von Anweisungen zum Starten der Anwendung;
Ändern mindestens einer für die Speicherrückgewinnungsoperation konfigurierten Speicherverwaltungseinstellung, um die Speicherrückgewinnungsoperation zu verzögern oder zu stoppen; und
basierend auf dem Abschluss des Ausführens der Sequenz von Anweisungen zum Starten der Anwendung, Wiederherstellen der mindestens einen Speicherverwaltungseinstellung in einen Zustand vor dem Ausführen der Sequenz von Anweisungen zum Starten der Anwendung,
wobei die Betriebsfrequenz der Speicherrückgewinnungsoperation reduziert wird, wenn die mindestens eine Speicherverwaltungseinstellung geändert wird, da eine Initiierung der Speicherrückgewinnungsoperation verzögert oder gestoppt wird.

13. Verfahren nach Anspruch 12, das ferner Folgendes umfasst:
als Reaktion auf ein zweites Ausführungsereignis der Anwendung, Ausführen einer Sequenz von Anweisungen zum Starten der Anwendung,
basierend auf dem Abschluss des Ausführens der Sequenz von Anweisungen zum Starten der Anwendung, die durch das zweite Ausführungsereignis initiiert wurde, Aufzeichnen einer Dauer der Sequenz von Anweisungen zum Starten der Anwendung als eine geschätzte Dauer der Sequenz von Anweisungen zum Starten der Anwendung, wobei die geschätzte Dauer die Zeitdauer von einem Zeitpunkt des zweiten Ausführungsereignisses bis zu einem Zeitpunkt des Abschlusses der Sequenz von Anweisungen zum Starten der Anwendung umfasst, und
Bestimmen, dass die Sequenz von Anweisungen zum Starten der Anwendung, die durch das erste Ausführungsereignis initiiert wurde, abgeschlossen ist, wenn die geschätzte Dauer seit dem ersten Ausführungsereignis verstrichen ist.

14. Verfahren nach Anspruch 12,
wobei die Speicherrückgewinnungsoperation eine Auslagerungsoperation eines Kernel-Auslagerungs-Daemons umfasst und die Auslagerungsoperation des Kernel-Auslagerungs-Daemons initiiert wird, wenn eine Menge des verfügbaren Platzes des ersten Speichers (310) kleiner als oder gleich einem ersten Schwellenwert ist, und beendet wird, wenn die Menge des verfügbaren Platzes des ersten Speichers (310) aufgrund der Auslagerungsoperation einen zweiten Schwellenwert erreicht, der höher als der erste Schwellenwert ist, und
wobei das Ändern der mindestens einen Speicherverwaltungseinstellung Folgendes umfasst:
Verringern des ersten Schwellenwerts und/oder des zweiten Schwellenwerts als Teil der Änderung der mindestens einen Speicherverwaltungseinstellung als Reaktion auf das erste Ausführungsereignis der Anwendung.

## Revendications

1. Dispositif électronique comprenant :
une première mémoire (310) ;
une deuxième mémoire (330) ayant des caractéristiques différentes des caractéristiques de la première mémoire (310) ; et
un processeur (350) connecté de manière opérationnelle à la première mémoire (310) et à la deuxième mémoire (330),
où le processeur (350) est configuré pour :
effectuer, sur la base d'une quantité d'espace disponible dans la première mémoire (310), une opération de récupération de mémoire pour augmenter l'espace disponible dans la première mémoire (310) ;
en réponse à un premier événement d'exécution d'une application stockée dans la deuxième mémoire (330), effectuer une séquence d'instructions pour lancer l'application et modifier au moins un paramètre de gestion de mémoire configuré pour l'opération de récupération de mémoire pour retarder ou arrêter l'opération de récupération de mémoire ; et
une fois la réalisation de la séquence d'instructions complétée pour lancer l'application, restaurer l'au moins un paramètre de gestion de mémoire à un état antérieur à la réalisation de la séquence d'instructions pour lancer l'application,
où si l'au moins un paramètre de gestion de mémoire est modifié, la fréquence de fonctionnement de l'opération de récupération de mémoire est réduite car un lancement de l'opération de récupération de mémoire est retardé ou arrêté.

2. Dispositif électronique selon la revendication 1, où le processeur (350) est en outre configuré pour :
en réponse à un deuxième événement d'exécution de l'application, effectuer une séquence d'instructions pour lancer l'application,
une fois la réalisation de la séquence d'instructions complétée pour lancer l'application initiée par le deuxième événement d'exécution, enregistrer une durée de la séquence d'instructions pour lancer l'application selon une durée estimée de la séquence d'instructions pour lancer l'application, la durée estimée comprend la durée entre un point temporel du deuxième événement d'exécution et un point temporel de l'accomplissement de la séquence d'instructions pour lancer l'application, et
déterminer que la séquence d'instructions pour lancer l'application initiée par le premier événement d'exécution est complétée, lorsque la durée estimée s'est écoulée depuis le premier événement d'exécution.

3. Dispositif électronique selon la revendication 1, où le processeur (350) est en outre configuré pour :
déterminer que la séquence d'instructions pour lancer l'application est complétée, lorsqu'un événement d'accomplissement de la séquence d'instructions pour lancer l'application est identifié.

4. Dispositif électronique selon la revendication 1,
où l'opération de récupération de mémoire comprend une opération d'échange d'un daemon d'échange de noyau, et où l'opération d'échange du daemon d'échange de noyau est initiée lorsqu'une quantité de l'espace disponible de la première mémoire (310) est inférieure ou égale à une première valeur seuil et est terminée lorsque la quantité de l'espace disponible de la première mémoire (310) atteint une deuxième valeur seuil supérieure à la première valeur seuil grâce à l'opération d'échange, et
où le processeur (350) est configuré, pour retarder l'opération d'échange, pour diminuer au moins l'une parmi la première valeur seuil et la deuxième valeur seuil, dans le cadre de la modification de l'au moins un paramètre de gestion de mémoire en réponse au premier événement d'exécution de l'application.

5. Dispositif électronique selon la revendication 1,
où l'opération de récupération de mémoire comprend une opération de destruction de processus de daemon tueur de mémoire faible, et
où l'opération de destruction de processus du daemon tueur de mémoire faible est initiée lorsqu'une quantité de l'espace disponible de la première mémoire (310) est inférieure ou égale à une troisième valeur seuil supérieure à la deuxième valeur seuil ; et
où le processeur (350) est configuré, pour retarder l'opération de destruction de processus, pour diminuer la troisième valeur seuil, dans le cadre de la modification de l'au moins un paramètre de gestion de mémoire, en réponse au premier événement d'exécution de l'application.

6. Dispositif électronique selon la revendication 5,
où une opération de récupération directe du daemon de l'échange de noyau est initiée lorsque la quantité de l'espace disponible de la première mémoire (310) est inférieure ou égale à une quatrième valeur seuil inférieure à la première valeur seuil ; et
où le processeur (350) est configuré pour ne pas modifier la quatrième valeur seuil même si l'au moins un paramètre de gestion de mémoire est modifié selon le premier événement d'exécution de l'application.

7. Dispositif électronique selon la revendication 5,
où le processeur (350) est configuré pour configurer la première valeur seuil avec une valeur supérieure à une valeur par défaut par rapport à la première valeur seuil désignée par un système d'exploitation du dispositif électronique, lorsque le dispositif électronique est démarré, de sorte que la différence entre la première valeur seuil et la quatrième valeur seuil est augmentée.

8. Dispositif électronique selon l'une des revendications 1 à 7,
où l'opération de récupération de mémoire comprend une opération de récupération par processus de daemon d'échange de noyau, et
où le processeur (350) est configuré pour arrêter l'opération de récupération par processus en réponse à la détection du premier événement d'exécution, dans le cadre de la modification de l'au moins un paramètre de gestion de mémoire.

9. Dispositif électronique selon l'une des revendications 1 à 8,
où le processeur (350) est en outre configuré pour modifier l'au moins un paramètre de gestion de mémoire dans le cas où un temps de retard d'exécution de tâches grâce à l'opération de récupération de mémoire est inférieur ou égal à un premier temps de référence et/ou dans le cas où une quantité de l'espace disponible de la première mémoire (310) est supérieure ou égale à une valeur de référence.

10. Dispositif électronique selon la revendication 2,
où le processeur (350) est en outre configuré pour enregistrer la durée de la séquence d'instructions pour lancer l'application selon la durée estimée, dans le cas où un temps de retard d'exécution de tâches grâce à l'exécution d'une autre tâche pendant la séquence d'instructions pour lancer l'application est inférieur ou égal à un deuxième temps de référence.

11. Dispositif électronique selon l'une quelconque des revendications 1 à 10,
où la séquence d'instructions pour lancer l'application comprend au moins l'un parmi :
charger des fichiers de l'application stockés dans la deuxième mémoire (330) à la première mémoire (310),
générer au moins l'un parmi une activité, un processus, ou un fil pour exécuter l'application, et
générer une donnée d'image de l'application.

12. Procédé pour gérer une mémoire d'un dispositif électronique, le procédé comprenant :
effectuer, sur la base d'une quantité d'espace disponible dans une première mémoire (310), une opération de récupération de mémoire pour augmenter l'espace disponible dans la première mémoire (310) ;
en réponse à un premier événement d'exécution d'une application stockée dans la deuxième mémoire (330), effectuer une séquence d'instructions pour lancer l'application ;
modifier au moins un paramètre de gestion de mémoire configuré pour l'opération de récupération de mémoire pour retarder ou arrêter l'opération de récupération de mémoire ; et
une fois la réalisation de la séquence d'instructions complétée pour lancer l'application, restaurer l'au moins un paramètre de gestion de mémoire à un état antérieur à la réalisation de la séquence d'instructions pour lancer l'application,
où si l'au moins un paramètre de gestion de mémoire est modifié, la fréquence de fonctionnement de l'opération de récupération de mémoire est réduite car un lancement de l'opération de récupération de mémoire est retardé ou arrêté.

13. Procédé selon la revendication 12, comprenant en outre :
en réponse à un deuxième événement d'exécution de l'application, effectuer une séquence d'instructions pour lancer l'application ;
une fois la réalisation de la séquence d'instructions complétée pour lancer l'application initiée par le deuxième événement d'exécution, enregistrer une durée de la séquence d'instructions pour lancer l'application selon une durée estimée de la séquence d'instructions pour lancer l'application, la durée estimée comprend la durée entre un point temporel du deuxième événement d'exécution et un point temporel de l'accomplissement de la séquence d'instructions pour lancer l'application, et
déterminer que la séquence d'instructions pour lancer l'application initiée par le premier événement d'exécution est complétée, lorsque la durée estimée s'est écoulée depuis le premier événement d'exécution.

14. Procédé selon la revendication 12,
où l'opération de récupération de mémoire comprend une opération d'échange d'un daemon d'échange de noyau, et l'opération d'échange du daemon d'échange de noyau est initiée lorsqu'une quantité de l'espace disponible de la première mémoire (310) est inférieure ou égale à une première valeur seuil et est terminée lorsque la quantité de l'espace disponible de la première mémoire (310) atteint une deuxième valeur seuil supérieure à la première valeur seuil grâce à l'opération d'échange, et
où la modification de l'au moins un paramètre de gestion de mémoire comprend :
diminuer au moins l'une parmi la première valeur seuil et la deuxième valeur seuil, dans le cadre de la modification de l'au moins un paramètre de gestion de mémoire, en réponse au premier événement d'exécution de l'application.
